# EUROPÄISCHE PATENTSCHRIFT

(11) **EP 3 847 760 B1**
(45) Veröffentlichungstag und Bekanntmachung des Hinweises auf die Patenterteilung: **29.12.2021**
(21) Anmeldenummer: 19769059.7
(22) Anmeldetag: 30.08.2019
(51) Int. Cl.: H04B 3/54, B63B 43/00, G05B 19/042

(54) **VERFAHREN UND VORRICHTUNG ZUR DATENÜBERMITTLUNG AN BORD EINES WASSERFAHRZEUGS**
METHOD AND DEVICE FOR DATA TRANSMISSION ON BOARD A WATERCRAFT
PROCÉDÉ ET DISPOSITIF POUR LA TRANSMISSION DE DONNÉES À BORD D'UN VÉHICULE AQUATIQUE

(30) Priorität: 05.09.2018 DE 102018215086
(43) Veröffentlichungstag der Anmeldung: 14.07.2021
(73) Patentinhaber: thyssenkrupp Marine Systems GmbH, 24143 Kiel (DE); thyssenkrupp AG, 45143 Essen (DE)
(72) Erfinder: SOMMER, Martin, 22607 Hamburg (DE); FISSER, Leonard, 21073 Hamburg (DE)
(74) Vertreter: thyssenkrupp Intellectual Property GmbH
(86) Internationale Anmeldenummer: PCT/EP2019/073196
(87) Internationale Veröffentlichungsnummer: WO 2020/048884

(56) Entgegenhaltungen:
- WO-A1-01/13186
- WO-A2-94/01949

## Beschreibung

Die Erfindung betrifft ein Verfahren und eine Vorrichtung zur Datenübermittlung an Bord eines Wasserfahrzeugs unter Verwendung eines bordeigenen Stromversorgungsnetzes.

In WO 94/01949 A2 wird ein Datenaustausch über ein Stromversorgungsnetz mit Wechselstromleitungen beschrieben. Die dort beschriebenen Verfahren und Vorrichtungen lassen sich beispielsweise an Bord eines Kriegsschiffs einsetzen.

Aus der WO 01/13186 A1 ist ein Schiffshilfskomponenten-Steuerungs- und Überwachungssystem bekannt, welches eine zentrale Steuereinheit umfasst, die über einen Bus mit mehreren lokalen Einheiten verbunden ist.

Aufgabe der Erfindung ist es, ein Wasserfahrzeug mit den Merkmalen des Oberbegriffs des Anspruchs 1 und ein Verfahren mit den Merkmalen des Oberbegriffs des Anspruchs 14 bereitzustellen, dessen elektrische Bestandteile sich mit geringerem Aufwand als bei bekannten Wasserfahrzeugen und Verfahren verbinden und warten lassen.

Gelöst wird diese Aufgabe durch ein Wasserfahrzeug mit den in Anspruch 1 angegebenen Merkmalen und ein Verfahren mit den in Anspruch 14 angegebenen Merkmalen. Vorteilhafte Weiterbildungen ergeben sich aus den Unteransprüchen, der nachfolgenden Beschreibung sowie den Zeichnungen.

Das erfindungsgemäße Wasserfahrzeug umfasst
- ein erstes elektrisches Verbraucher-Modul,
- ein zentrales Steuergerät,
- ein Stromversorgungsnetz und
- ein Datenverbindungs-System.

Das Datenverbindungs-System umfasst
- eine erste Kopfstation,
- ein erstes Koppelmodul,
- eine erste Steuergerät-Kopfstation-Datenverbindung,
- eine erste Kopfstation-Stromnetz-Datenverbindung,
- eine erste Koppelmodul-Stromnetz-Datenverbindung und
- eine erste Koppelmodul-Verbraucher-Datenverbindung.

Die erste Steuergerät-Kopfstation-Datenverbindung stellt wenigstens zeitweise eine Datenverbindung zwischen dem zentralen Steuergerät und der ersten Kopfstation bereit. Die erste Kopfstation-Stromnetz-Datenverbindung stellt wenigstens zeitweise eine Datenverbindung zwischen der ersten Kopfstation und dem Stromversorgungsnetz bereit. Die erste Koppelmodul-Stromnetz-Datenverbindung stellt wenigstens zeitweise eine Datenverbindung zwischen dem ersten Koppelmodul und dem Stromversorgungsnetz bereit. Die erste Koppelmodul-Verbraucher-Datenverbindung stellt wenigstens zeitweise eine Datenverbindung zwischen dem ersten Koppelmodul und dem ersten elektrischen Verbraucher-Modul bereit.

Das Stromversorgungsnetz vermag das erste Verbraucher-Modul elektrisch zu versorgen. Das zentrale Steuergerät vermag automatisch eine Anweisung für das erste Verbraucher-Modul zu generieren. Das Wasserfahrzeug vermag diese Anweisung von dem zentralen Steuergerät automatisch an das erste Verbraucher-Modul zu übermitteln. Das erste Verbraucher-Modul lässt sich von außen ansteuern und vermag die empfangene Anweisung automatisch zu verarbeiten.

Das Wasserfahrzeug vermag die Anweisung auf folgendem Wege von dem zentralen Steuergerät an das erste Verbraucher-Modul zu übermitteln:
- Die Anweisung wird vom zentralen Steuergerät über die erste Steuergerät-Kopfstation-Datenverbindung an die erste Kopfstation übermittelt.
- Die erste Kopfstation wandelt die Anweisung, die über diese Datenverbindung übermittelt wurde, in ein Anweisungs-Signal um. Dieses Anweisungs-Signal lässt sich über das Stromversorgungsnetz übertragen.
- Die Anweisung wird in Form des Anweisungs-Signals auf folgendem Wege von der ersten Kopfstation an das erste Koppelmodul übertragen: von der ersten Kopfstation über die erste Kopfstation-Stromnetz-Datenverbindung, über das Stromversorgungsnetz und über die erste Koppelmodul-Stromnetz-Datenverbindung an das erste Koppelmodul.
- Das erste Koppelmodul erzeugt aus dem Anweisungs-Signal wieder eine Anweisung, welche sich über eine Datenverbindung übermitteln lässt.
- Die Anweisung wird vom ersten Koppelmodul über die erste Koppelmodul-Verbraucher-Datenverbindung an das erste elektrische Verbraucher-Modul übermittelt.

Das Stromversorgungsnetz ist also in einem ersten Verbindungspunkt mit der ersten Kopfstation verbunden und in einem zweiten Verbindungspunkt mit dem ersten Koppelmodul. Zwischen diesen beiden Verbindungspunkten tritt ein räumlicher Abstand auf. Die beiden Verbindungspunkte sind mit Hilfe des Stromversorgungsnetzes elektrisch miteinander verbunden.

Mit dem Begriff "Datenverbindung" wird eine Verbindung bezeichnet, die zur Übertragung von Daten geeignet ist, aber nicht notwendigerweise dazu geeignet ist, einen elektrischen Verbraucher mit Strom zu versorgen. In der Regel ist eine solche Datenverbindung mit Hilfe einer speziellen Datenleitung oder einer drahtlosen Datenverbindung realisiert. Die Datenverbindung kann eine Punkt-zu-Punkt-Verbindung sein oder eine Datenverbindung, an der mehrere Sender und / oder mehrere Empfänger angeschlossen sind, beispielsweise ein Datenbus.

Lösungsgemäß wird ein Befehl vom zentralen Steuergerät an das erste VerbraucherModul nur teilweise über spezielle Datenverbindungen übertragen. Teilweise wird der Befehl hingegen über das Stromversorgungsnetz übertragen, über welche das erste Verbraucher-Modul und bei Bedarf weitere Verbraucher-Module sowie das zentrale Steuergerät und die Geräte des Datenverbindungs-Systems mit Strom versorgt werden.

Das Stromversorgungsnetz übernimmt daher lösungsgemäß zwei Aufgaben: Stromversorgung und zusätzlich Datenübertragung. Dank dieses Merkmals sind weniger spezielle Datenverbindungen erforderlich. Jeweils eine spezielle Datenverbindung ist zwischen dem zentralen Steuergerät und der ersten Kopfstation sowie zwischen dem ersten Koppelmodul und dem ersten Verbraucher-Modul erforderlich, aber nicht zwischen der ersten Kopfstation und dem ersten Koppelmodul. Vielmehr verbindet das Stromversorgungsnetz die erste Kopfstation mit dem ersten Koppelmodul und stellt einen Datenübertragungskanal bereit.

Die Erfindung lässt sich insbesondere dann mit besonders großem Nutzen einsetzen, wenn zwischen dem zentralen Steuergerät und dem ersten Verbraucher-Modul ein relativ großer Abstand auftritt. Dank der Erfindung ist es möglich, die erste Kopfstation räumlich nahe beim zentralen Steuergerät und das erste Koppelmodul räumlich nahe beim ersten Verbraucher-Modul anzuordnen. Dadurch brauchen die speziellen Datenverbindungen jeweils nur eine relativ kurze Strecke zu überbrücken.

Ermöglicht wird, das erste Verbraucher-Modul und das erste Koppelmodul als Bestandteile einer ersten Baugruppe auszugestalten. Diese erste Baugruppe lässt sich an das Stromversorgungsnetz anschließen, und zwar bevorzugt lösbar. Indem diese erste Baugruppe an das Stromversorgungsnetz angeschlossen wird, wird zugleich eine Datenübermittlung von dem zentralen Steuergerät an das erste Verbraucher-Modul ermöglicht. Nicht erforderlich ist es, zusätzlich zur Verbindung der Baugruppe mit dem Stromversorgungsnetz eine spezielle Datenverbindung herzustellen. Insbesondere ist keine zusätzliche Verkabelung erforderlich. Die Erfindung reduziert daher den manuellen Aufwand beim Verbinden des ersten Verbraucher-Moduls. Außerdem sind weniger Koppelstellen, insbesondere weniger Stecker, erforderlich, um das erste Verbraucher-Modul sowohl mit dem Stromversorgungsnetz als auch mit dem zentralen Steuergerät zu verbinden.

Ein weiterer Vorteil der Erfindung ist der folgende: Dank der lösungsgemäßen ersten Kopfstation und des ersten Koppelmoduls lassen sich das zentrale Steuergerät und das erste Verbraucher-Modul unabhängig davon realisieren, ob die Datenübertragung ausschließlich über spezielle Datenverbindungen oder aber zum Teil über spezielle Datenverbindungen und zum Teil über das Stromversorgungsnetz durchgeführt wird. Insbesondere ist es nicht erforderlich, das zentrale Steuergerät oder ein VerbraucherModul an eine Datenübertragung über ein Stromversorgungsnetz anzupassen. Die Erfindung führt also zu weniger Restriktionen beim Entwurf der ersten Kopfstation und des ersten Koppelmoduls.

Lösungsgemäß wird die Anweisung von der ersten Kopfstation an das erste Koppelmodul über das Stromversorgungsnetz übertragen. Bevorzugt wird hierbei eine Frequenz für eine Datenübertragung dem Stromversorgungsnetz aufmoduliert und dadurch auf dem Stromversorgungsnetz ein Datenübertragungskanal bereitgestellt, ohne eine spezielle Datenverbindung zu benötigen. Bevorzugt liegt die Frequenz für die Datenübertragung auf dem Stromversorgungsnetz unterhalb von 1 MHz, besonders bevorzugt unterhalb von 500 kHz. Diese Ausgestaltung führt zu einer relativ geringen elektromagnetischen Abstrahlung, welche insbesondere an Bord eines Wasserfahrzeugs oft unerwünscht ist.

Lösungsgemäß wird die Anweisung teilweise über das Stromversorgungsnetz und teilweise über spezielle Datenverbindungen von dem zentralen Steuergerät an das erste Verbraucher-Modul übertragen. In einer Ausgestaltung ist das Stromversorgungsnetz geerdet, d.h. elektrisch mit der Masse des Wasserfahrzeugs verbunden, und stellt dadurch ein Referenz-Spannungspotenzial, insbesondere ein Nullpotenzial, bereit. Durch eine Fehlerstrom-Überwachung wird automatisch sichergestellt, dass niemals ein Besatzungsmitglied des Wasserfahrzeugs gefährdet wird, auch dann, wenn dieses Besatzungsmitglied das Stromversorgungsnetz berührt hat. Dank der Erfindung lassen sich die speziellen Datenverbindungen hingegen als nicht geerdete Datenverbindungen ausgestalten. Dank der Verbindung mit dem Spannungsversorgungsnetz wird trotzdem ein Referenz-Spannungspotenzial bereitgestellt. Diese Ausgestaltung ermöglicht es, für die gesamte Datenverbindung eine automatische Fehlerstrom-Überwachung sicherzustellen und die Isolierungen aus der Ferne zu überwachen.

Lösungsgemäß lässt sich eine Anweisung vom zentralen Steuergerät an das erste elektrische Verbraucher-Modul übermitteln. In einer Ausgestaltung vermag das erste Verbraucher-Modul automatisch eine Meldung zu generieren, und das zentrale Steuergerät vermag diese Meldung automatisch zu verarbeiten. Diese Meldung lässt sich von dem ersten Verbraucher-Modul an das zentrale Steuergerät übermitteln, wofür ebenfalls das Stromversorgungsnetz verwendet wird. Um die Meldung an das zentrale Steuergerät zu übermitteln, wird das Datenverbindungs-System in entgegengesetzte Richtung verwendet als beim Übermitteln der Anweisung an das erste VerbraucherModul. In dieser Ausgestaltung sind die Bestandteile des Datenverbindungs-Systems bidirektional ausgestaltet.

Die Meldung wird vom ersten Verbraucher-Modul an das zentrale Steuergerät nur teilweise über eine spezielle Datenverbindung übertragen. Die Meldung wird gemäß dieser Ausgestaltung auf folgendem Wege von dem ersten Verbraucher-Modul an das zentrale Steuergerät übermittelt:
- Die Meldung wird vom ersten Verbraucher-Modul über die erste Koppelmodul-Verbraucher-Datenverbindung an das erste Koppelmodul übermittelt.
- Das erste Koppelmodul wandelt die Meldung, die über diese Datenverbindung übermittelt wurde, in ein Meldungs-Signal um. Dieses Meldungs-Signal lässt sich über das Stromversorgungsnetz übertragen.
- Die Meldung wird in Form des Meldungs-Signals von dem ersten Koppelmodul über die erste Koppelmodul-Stromnetz-Datenverbindung, das Stromversorgungsnetz und die erste Kopfstation-Stromnetz-Datenverbindung an die erste Kopfstation übertragen.
- Die erste Kopfstation wandelt das Meldungs-Signal, das über das Stromversorgungsnetz übertragen wurde, wieder in eine Meldung um, welche sich über eine Datenverbindung übermitteln lässt.
- Diese Meldung wird von der ersten Kopfstation über die erste Steuergerät-Kopfstation-Datenverbindung an das zentrale Steuergerät übermittelt.

In einer Ausgestaltung umfasst das Datenverbindungs-System eine zweite Kopfstation, welche parallel zur ersten Kopfstation angeordnet ist. Weiterhin umfasst das Datenverbindungs-System
- eine zweite Steuergerät-Kopfstation-Datenverbindung und
- eine zweite Kopfstation-Stromnetz-Datenverbindung.

Die zweite Steuergerät-Kopfstation-Datenverbindung stellt wenigstens zeitweise eine Datenverbindung zwischen dem zentralen Steuergerät und der zweiten Kopfstation bereit. Die zweite Kopfstation-Stromnetz-Datenverbindung stellt wenigstens zeitweise eine Datenverbindung zwischen der zweiten Kopfstation und dem Stromversorgungsnetz bereit.

Gemäß dieser Ausgestaltung lässt sich eine Anweisung vom zentralen Steuergerät nicht nur über die erste Kopfstation, sondern auch über die zweite Kopfstation an das erste Verbraucher-Modul übertragen, und zwar bevorzugt wahlweise entweder über die erste Kopfstation oder über die zweite Kopfstation. Bei Verwendung der zweiten Kopfstation wird die Anweisung auf folgendem Wege übertragen:
- Die Anweisung wird vom zentralen Steuergerät über die zweite Steuergerät-Kopfstation-Datenverbindung an die zweite Kopfstation übermittelt.
- Die zweite Kopfstation wandelt die Anweisung, die über diese Datenverbindung übermittelt wurde, in ein Anweisungs-Signal um. Dieses Anweisungs-Signal lässt sich über das Stromversorgungsnetz übertragen.
- Die Anweisung wird in Form des Anweisungs-Signals auf folgendem Wege von der zweiten Kopfstation an das erste Koppelmodul übertragen: von der zweiten Kopfstation über die zweite Kopfstation-Stromnetz-Datenverbindung, über das Stromversorgungsnetz und über die erste Koppelmodul-Stromnetz-Datenverbindung an das erste Koppelmodul.
- Das erste Koppelmodul erzeugt aus dem Anweisungs-Signal wieder eine Anweisung, welche sich über eine Datenverbindung übermitteln lässt.
- Die Anweisung wird vom ersten Koppelmodul über die erste Koppelmodul-Verbraucher-Datenverbindung an das erste elektrische Verbraucher-Modul übermittelt.

Diese Ausgestaltung stellt Redundanz bereit. Eine Kopfstation reicht aus, um den Datenaustausch zwischen dem zentralen Steuergerät und dem ersten VerbraucherModul über das erste Koppelmodul zu gewährleisten. Die andere Kopfstation steht in Reserve und wird bevorzugt ständig mit Strom versorgt. Falls die gerade verwendete Kopfstation ausfällt, so vermag das Datenverbindungs-System automatisch rasch auf die andere Kopfstation umzuschalten. Der Datenaustausch ist nur für kurze Zeit unterbrochen. Nicht erforderlich ist es, erst nach dem Ausfall einer Kopfstation eine Datenverbindung oder einen Anschluss an das Stromversorgungsnetz herzustellen, was Zeit erfordert.

In einer Fortbildung dieser Ausgestaltung mit der zweiten Kopfstation umfasst das Datenverbindungs-System mindestens ein Datenverbindungs-Steuergerät. Das oder jedes Datenverbindungs-Steuergerät vermag automatisch wie folgt zu arbeiten:
- Falls sowohl die erste Kopfstation als auch die zweite Kopfstation funktionsfähig sind, wählt das Datenverbindungs-Steuergerät eine dieser beiden Kopfstationen aus und aktiviert die ausgewählte Kopfstation.
- Falls die eine Kopfstation ausgefallen ist und nur die andere Kopfstation funktionsfähig ist, so aktiviert das Datenverbindungs-Steuergerät die andere, also die funktionsfähige Kopfstation.
- In beiden Fällen richtet das Datenverbindungs-Steuergerät eine erste Datenverbindung zwischen dem zentralen Steuergerät und dem ersten VerbraucherModul ein. Diese erste Datenverbindung wird unter Einbeziehung des Stromversorgungsnetzes, der aktivierten Kopfstation und des ersten Koppelmoduls eingerichtet. Eine Anweisung und eine Meldung lassen sich über diese erste Datenverbindung übermitteln.

In einer bevorzugten Ausgestaltung registrieren sich das erste Koppelmodul und gegebenenfalls weitere Koppelmodule für weitere elektrische Verbraucher-Module automatisch bei der zu aktivierenden oder aktivierten Kopfstation. Dadurch wird die Notwendigkeit eingespart, vorab in jeder Kopfstation abzuspeichern, welche Koppelmodule mit dieser Kopfstation zu verbinden sind. Eine solche abgespeicherte Information kann veraltet sein. Vielmehr wird automatisch ermittelt, welche Koppelmodule aktuell mit der zu aktivierenden oder aktivierten Kopfstation zu verbinden sind, und diese Information wird abgelegt und bei Bedarf automatisch aktualisiert.

In einer Ausgestaltung vermag das oder jedes Datenverbindungs-Steuergerät automatisch festzustellen, dass die aktivierte Kopfstation ausgefallen ist, nachdem die erste Datenverbindung eingerichtet ist. Als Reaktion hierauf vermag das Datenverbindungs-Steuergerät die andere Kopfstation zu aktivieren - natürlich nur, wenn die andere Kopfstation funktionsfähig ist. Das oder jedes andere Datenverbindungs-Steuergerät vermag eine zweite Datenverbindung zwischen dem zentralen Steuergerät und dem ersten Verbraucher-Modul einzurichten. Diese zweite Datenverbindung umfasst das Stromversorgungsnetz, die aktivierte andere Kopfstation und das erste Koppelmodul.

In einer Ausgestaltung umfasst die erste Kopfstation ein erstes Datenverbindungs-Steuergerät. Die zweite Kopfstation umfasst ein zweites Datenverbindungs-Steuergerät. Jedes Datenverbindungs-Steuergerät vermag die oben beschriebenen Schritte durchzuführen. Insbesondere vermag das erste Datenverbindungs-Steuergerät eine Datenverbindung zwischen dem zentralen Steuergerät und dem ersten Koppelmodul unter Einbeziehung der ersten Kopfstation einzurichten. Das zweite Datenverbindungs-Steuergerät vermag eine weitere Datenverbindung zwischen dem zentralen Steuergerät und dem zweiten Koppelmodul unter Einbeziehung der zweiten Kopfstation einzurichten. Diese Ausgestaltung stellt sicher, dass bei Ausfall einer Kopfstation auf die andere Kopfstation umgeschaltet wird, ohne dass hierfür ein manueller oder automatischer Stelleingriff von außen erforderlich ist. Insbesondere ist kein Stelleingriff des zentralen Steuergeräts erforderlich, um auf die andere, funktionsfähige Kopfstation umzuschalten. Dadurch wird Zeit eingespart.

Vorzugsweise vermag jedes Datenverbindungs-Steuergerät festzustellen, ob die andere Kopfstation und somit das andere Datenverbindungs-Steuergerät funktionsfähig oder ausgefallen ist. Falls jedes Datenverbindungs-Steuergerät feststellt, dass die andere Kopfstation und somit das andere Datenverbindungs-Steuergerät funktionsfähig ist, so wird eine Kopfstation gemäß einer vorgegebenen Vorschrift ausgewählt und aktiviert. Falls ein Datenverbindungs-Steuergerät feststellt, dass das andere Datenverbindungs-Steuergerät ausgefallen ist, beispielsweise auf einer Anfrage nicht antwortet, so stellt dieses Datenverbindungs-Steuergerät eine Datenverbindung hier.

In einer Ausgestaltung umfasst das Wasserfahrzeug zusätzlich ein zweites elektrisches Verbraucher-Modul. Das Datenverbindungs-System umfasst zusätzlich
- ein zweites Koppelmodul,
- eine zweite Koppelmodul-Stromnetz-Datenverbindung und
- eine zweite Koppelmodul-Verbraucher-Datenverbindung.

Die zweite Koppelmodul-Stromnetz-Datenverbindung stellt wenigstens zeitweise eine Datenverbindung zwischen dem zweiten Koppelmodul und dem Stromversorgungsnetz bereit. Die zweite Koppelmodul-Verbraucher-Datenverbindung stellt wenigstens zeitweise eine Datenverbindung zwischen dem zweiten Koppelmodul und dem zweiten elektrischen Verbraucher-Modul bereit.

Das zentrale Steuergerät vermag eine Anweisung für das zweite Verbraucher-Modul zu generieren. Das zweite Verbraucher-Modul vermag eine empfangene Anweisung automatisch zu verarbeiten. Das Wasserfahrzeug vermag diese Anweisung auf folgendem Wege von dem zentralen Steuergerät an das zweite Verbraucher-Modul zu übermitteln:
- Die Anweisung wird vom zentralen Steuergerät über die erste Steuergerät-Kopfstation-Datenverbindung an die erste Kopfstation übermittelt.
- Die erste Kopfstation wandelt die Anweisung, die über diese Datenverbindung übermittelt wurde, in ein Anweisungs-Signal um. Dieses Anweisungs-Signal lässt sich über das Stromversorgungsnetz übertragen.
- Die Anweisung wird in Form des Anweisungs-Signals auf folgendem Wege von der ersten Kopfstation an das zweite Koppelmodul übertragen: von der ersten Kopfstation über die erste Kopfstation-Stromnetz-Datenverbindung, über das Stromversorgungsnetz und über die zweite Koppelmodul-Stromnetz-Datenverbindung an das zweite Koppelmodul.
- Das zweite Koppelmodul erzeugt aus dem Anweisungs-Signal wieder einer Anweisung, welche sich über eine Datenverbindung übermitteln lässt.
- Die Anweisung wird vom zweiten Koppelmodul über die zweite Koppelmodul-Verbraucher-Datenverbindung an das zweite elektrische Verbraucher-Modul übermittelt.

Die gleiche erste Kopfstation kann gemäß dieser Ausgestaltung eine Datenübertragung von dem zentralen Steuergerät an mehrere parallel angeordnete elektrische Verbraucher-Module über jeweils ein zugeordnetes Koppelmodul ermöglichen.

Diese Ausgestaltung mit dem zweiten elektrischen Verbraucher-Modul lässt sich mit der Ausgestaltung, bei der parallel zur ersten Kopfstation eine bevorzugt redundante zweite Kopfstation vorgesehen ist, kombinieren. Die Anweisung vom zentralen Steuergerät an das zweite Verbraucher-Modul wird dann wahlweise über die erste Kopfstation oder die zweite Kopfstation übertragen.

Vorzugsweise sind das erste Verbraucher-Modul und das erste Koppelmodul als Bestandteile einer ersten Baugruppe ausgebildet. Diese erste Baugruppe lässt sich lösbar mit dem Stromversorgungsnetz verbinden. Indem die erste Baugruppe mit dem Stromversorgungsnetz verbunden wird, wird gleichzeitig eine Datenverbindung zwischen dem ersten Verbraucher-Modul und dem zentralen Steuergerät ermöglicht, wobei diese Datenverbindung das Stromversorgungsnetz nutzt. Entsprechend lassen sich das zweite Verbraucher-Modul und das zweite Koppelmodul als Bestandteil einer zweiten Baugruppe ausbilden.

In einer Ausgestaltung umfasst das erste Verbraucher-Modul ein lokales Steuergerät und einen ersten elektrischen Verbraucher. Die erste Koppelmodul-Verbraucher-Datenverbindung stellt wenigstens zeitweise eine Datenverbindung zwischen dem ersten Koppelmodul und dem lokalen Steuergerät her. Mit Hilfe dieser Datenverbindung lässt sich eine Anweisung vom zentralen Steuergerät an das lokale Steuergerät des ersten Verbraucher-Moduls übermitteln. Das lokale Steuergerät vermag den ersten elektrischen Verbraucher anzusteuern, und zwar abhängig von einer übermittelten Anweisung von dem zentralen Steuergerät. Möglich ist, dass die oben erwähnte erste Baugruppe zusätzlich zu dem ersten Koppelmodul den ersten elektrischen Verbraucher und das lokale Steuergerät umfasst.

In einer Ausgestaltung lässt sich die Anweisung vom zentralen Steuergerät mit Hilfe einer Feldbus-Verbindung an das erste Verbraucher-Modul übertragen. Das Datenverbindungs-System umfasst zusätzlich
- einen Feldbus-Master und
- einen ersten Feldbus-Slave.

Die erste Steuergerät-Kopfstation-Datenverbindung umfasst zwei einzelne Datenverbindungen, nämlich
- eine Steuergerät-Feldbus-Datenverbindung und
- eine erste Feldbus-Kopfstation-Datenverbindung.

Die erste Koppelmodul-Verbraucher-Datenverbindung umfasst ebenfalls zwei einzelne Datenverbindungen, nämlich
- eine erste Koppelmodul-Feldbus-Datenverbindung und
- eine erste Slave-Verbraucher-Datenverbindung.

Die Steuergerät-Feldbus-Datenverbindung stellt wenigstens zeitweise eine Datenverbindung zwischen dem zentralen Steuergerät und dem Feldbus-Master bereit. Die erste Feldbus-Kopfstation-Datenverbindung stellt wenigstens zeitweise eine Datenverbindung zwischen dem Feldbus-Master und der ersten Kopfstation bereit. Die erste Koppelmodul-Feldbus-Datenverbindung stellt wenigstens zeitweise eine Datenverbindung zwischen dem ersten Koppelmodul und dem ersten Feldbus-Slave bereit. Die erste Slave-Verbraucher-Datenverbindung stellt wenigstens zeitweise eine Datenverbindung zwischen dem ersten Feldbus-Slave und dem ersten elektrischen Verbraucher-Modul bereit.

In dieser Ausgestaltung wird eine Feldbus-Verbindung zwischen dem Feldbus-Master und dem ersten Feldbus-Slave bereitgestellt. Diese Feldbus-Verbindung umfasst folgende Bestandteile:
- die Steuergerät-Feldbus-Datenverbindung,
- die erste Feldbus-Kopfstation-Datenverbindung,
- die erste Kopfstation-Stromnetz-Datenverbindung,
- das Stromversorgungsnetz oder ein Teil des Stromversorgungsnetzes, über welchen sich ein Anweisungs-Signal übertragen lässt,
- die erste Koppelmodul-Stromnetz-Datenverbindung und
- die erste Koppelmodul-Feldbus-Datenverbindung.

Eine Anweisung wird gemäß dieser Ausgestaltung auf folgendem Wege von dem zentralen Steuergerät an das erste Verbraucher-Modul übermittelt:
- Die Anweisung wird vom zentralen Steuergerät über die Steuergerät-Feldbus-Datenverbindung an den Feldbus-Master übermittelt.
- Der Feldbus-Master wandelt eine Anweisung, die über diese Datenverbindung übermittelt wurde, in eine Feldbus-Anweisung um. Das ist eine Anweisung, die sich über eine Feldbus-Verbindung übertragen lässt.
- Diese Feldbus-Anweisung wird über die bereitgestellte Feldbus-Verbindung von dem Feldbus-Master an den ersten Feldbus-Slave übermittelt. Im vorigen Absatz wurde aufgelistet, welche Bestandteile diese bereitgestellte Feldbus-Verbindung aufweist. Die Feldbus-Verbindung nutzt das Stromversorgungsnetz.
- Der erste Feldbus-Slave wandelt die Feldbus-Anweisung, die über diese Feldbus-Verbindung übermittelt wurde, in eine Anweisung um, die sich über eine Datenverbindung übermitteln lässt, welche nicht notwendigerweise eine Feldbus-Verbindung ist.
- Diese Anweisung wird vom ersten Feldbus-Slave über die erste Slave-Verbraucher-Datenverbindung an das erste elektrische Verbraucher-Modul übermittelt.

In der Regel sind mehrere Sender und / oder mehrere Empfänger mit einer Feldbus-Verbindung verbunden. Daher umfasst eine Feldbus-Anweisung neben den Nutzdaten, also der eigentlichen Anweisung, Informationen zum Empfänger und optional zum Sender sowie optional Informationen zur Priorität der Anweisung und optional weitere Übertragungsinformationen.

Möglich ist, dass auch eine Meldung von dem ersten Verbraucher-Modul mit Hilfe des ersten Feldbus-Slave und des Feldbus-Master und somit mittels dieser Feldbus-Verbindung an das zentrale Steuergerät übermittelt wird.

Möglich ist, dass ein zweiter Feldbus-Slave mit dem zweiten Verbraucher-Modul sowie mit dem zweiten Koppelmodul in einer Datenverbindung steht und eine entsprechende Feldbus-Verbindung zwischen dem Feldbus-Master und dem zweiten Feldbus-Slave aufgebaut ist.

Die Feldbus-Verbindung der Ausgestaltung lässt sich von einem Feldbus-System bereitstellen. Ein Feldbus-System ist eine bewährte und in Ausprägungen standardisierte Vorgehensweise, um ein zentrales Steuergerät mit einem ansteuerbaren elektrischen Verbraucher-Modul zu verbinden und einen Datenaustausch zwischen diesen beiden Geräten zu ermöglichen. Ein Feldbus-System erspart Punkt-zu Punkt-Verbindungen zwischen verschiedenen Geräten des Wasserfahrzeugs. Standardisierte Feldbus-Übertragungsverfahren und Feldbus-Geräte, die gemäß diesen standardisierten Übertragungsverfahren arbeiten, sind verfügbar.

Ein solches Feldbus-System lässt sich unabhängig davon realisieren, ob der Feldbus-Master und der erste Feldbus-Slave über eine spezielle Datenleitung oder über ein Stromversorgungsnetz miteinander verbunden sind. Gemäß dieser Ausgestaltung wird die Feldbus-Verbindung zwischen dem Feldbus-Master und dem ersten Feldbus-Slave mithilfe des Stromversorgungsnetzes realisiert, ohne dass der Feldbus-Master oder der erste Feldbus-Slave notwendigerweise in Datenverbindung mit dem Stromversorgungsnetz stehen. Ausreichend für die Feldbus-Verbindung ist, dass der Feldbus-Master in Datenverbindung mit der oder jeder Kopfstation und der erste Feldbus-Slave in Datenverbindung mit dem ersten Koppelmodul stehen.

Der erste Feldbus-Slave kann in das erste Koppelmodul integriert sein. Oder der erste Feldbus-Slave und das erste Koppelmodul bilden zusammen eine erste Baueinheit.

In einer Ausgestaltung umfasst die erste Baugruppe neben dem ersten Koppelmodul und dem ersten Verbraucher-Modul auch den ersten Feldbus-Slave. Diese erste Baugruppe lässt sich lösbar mit dem Stromversorgungsnetz verbinden, und zwar bevorzugt mit demjenigen Teil, welches zu der Feldbus-Verbindung gehört. Indem die erste Baugruppe mit dem Stromversorgungsnetz verbunden wird, lässt sich ohne zusätzliche Verkabelung die Feldbus-Verbindung herstellen.

In einer Ausgestaltung werden Daten zwischen der ersten Kopfstation und dem ersten Koppelmodul ausschließlich über das Stromversorgungsnetz übertragen. In einer alternativen Ausgestaltung wird diese Datenübertragung hingegen nur teilweise über das Stromversorgungsnetz und teilweise über eine spezielle Datenverbindung geführt. Ein zu übertragendes Signal wird an einer Entnahmestelle dem Stromversorgungsnetz entnommen und an einer Einspeisestelle, die räumlich entfernt von der Entnahmestelle ist, wieder in das Stromversorgungsnetz eingespeist. Diese spezielle Datenverbindung wird insbesondere dann verwendet, wenn das Stromversorgungsnetz in einen ersten Teil und mindestens einen zweiten Teil unterteilt ist, wobei diese beiden Teile galvanisch voneinander getrennt sind. Dadurch ist die erste Kopfstation auch galvanisch von dem ersten Koppelmodul getrennt. Die erste Kopfstation ist mit dem ersten Teil des Stromversorgungsnetzes verbunden, das zweite Koppelmodul mit dem zweiten Teil. Die spezielle Datenverbindung überbrückt diese galvanische Trennung zwischen den beiden Teilen und kann ein spezielles Zwischen-Modul umfassen.

In einer Ausgestaltung umfasst das Wasserfahrzeug ein erstes Stromversorgungsnetz und ein zweites Stromversorgungsnetz. Jedes Stromversorgungsnetz umfasst jeweils eine Kopfstation, die mit demselben zentralen Steuergerät verbunden ist, ein elektrisches Verbraucher-Modul und ein Koppelmodul, welches mit diesem Verbraucher-Modul verbunden ist. Die Erfindung wird in beiden Stromversorgungsnetzen jeweils mindestens einmal realisiert. Das zentrale Steuergerät kann eine Anweisung mit Hilfe des ersten Stromversorgungsnetzes an ein VerbraucherModul oder mit Hilfe des zweiten Stromversorgungsnetzes an ein anderes VerbraucherModul absetzen oder auch dieselbe Anweisung über die beiden Stromversorgungsnetze an beide Verbraucher-Module.

In einer Ausgestaltung umfasst das Wasserfahrzeug mindestens eine eigene Spannungsquelle. Diese Spannungsquelle ist elektrisch mit dem Stromversorgungsnetz verbunden und vermag über das Stromversorgungsnetz das erste elektrische Verbraucher-Modul und optional weitere Verbraucher-Module, die an das Stromversorgungsnetz angeschlossen sind, elektrisch zu versorgen. Dank dieser Ausgestaltung vermag das Wasserfahrzeug autonom zu operieren.

In einer anderen Ausgestaltung ist das Wasserfahrzeug im Betrieb über eine Stromverbindung, beispielsweise über ein Stromkabel, mit einem weiteren Wasserfahrzeug oder einer sonstigen externen Plattform verbunden und wird über diese Stromverbindung mit elektrischer Energie versorgt. Diese Ausgestaltung spart eine Stromquelle an Bord des Wasserfahrzeugs ein.

In einer Ausgestaltung ist dem ersten Verbraucher-Modul und / oder dem ersten Koppelmodul ein erster Energiespeicher zugeordnet. Dieser erste Energiespeicher vermag zeitweise wenigstens das erste Koppelmodul oder jedes Modul elektrisch zu versorgen. Dieser erste Energiespeicher vermag eine Datenkommunikation zwischen dem zentralen Steuergerät und dem ersten Verbraucher-Modul auch dann aufrechtzuerhalten, wenn das erste Koppelmodul zeitweise vom Spannungsversorgungsnetz getrennt ist und daher das erste Koppelmodul nicht über das Spannungsversorgungsnetz mit Strom versorgt wird. Möglich ist, dass dieser erste Energiespeicher zusätzlich einen Bestandteil des ersten Verbraucher-Moduls elektrisch versorgt, beispielsweise ein lokales Steuergerät. In einer Realisierungsform umfasst der erste Energiespeicher einen Kondensator und einen Spannungsregler. Dank des ersten Energiespeichers ist es nicht erforderlich, eine redundante zusätzliche Spannungsversorgung für das erste Verbrauchermodul oder für das erste Koppelmodul vorherzusehen. Dies würde zusätzlichen Aufwand für Verkabelung erfordern. Dank des ersten Energiespeichers wird trotzdem die Energieversorgung des ersten Verbraucher-Moduls und / oder des ersten Koppelmoduls für einen gewissen Zeitraum sichergestellt.

In einer Ausgestaltung ist die erste Kopfstation elektrisch mit dem Spannungsversorgungsnetz und zusätzlich mit einem Notfall-Spannungsversorgungsnetz verbunden. Dieses Notfall-Spannungsversorgungsnetz umfasst eine unterbrechungsfreie Spannungsversorgung. Bevorzugt wird automatisch die Situation erkannt, dass die erste Kopfstation nicht mehr von dem Spannungsversorgungsnetz versorgt wird, und automatisch auf das Notfall-Spannungsversorgungsnetz mit der unterbrechungsfreien Spannungsversorgung umgeschaltet. Diese Ausgestaltung stellt sicher, dass die erste Kopfstation auch dann elektrisch versorgt wird, wenn die Versorgung durch das Spannungsversorgungsnetz ausfällt oder unterbrochen ist. Möglich ist, dass auch das erste Koppelmodul mit dieser Notfall-Spannungsversorgung elektrisch verbunden ist.

Das lösungsgemäße Wasserfahrzeug kann ein Überwasserfahrzeug oder ein Unterwasserfahrzeug sein. Das Wasserfahrzeug kann einen eigenen Antrieb aufweisen, beispielsweise einen Elektromotor, oder kann ohne einen eigenen Antrieb sein. Das erste elektrische Verbraucher-Modul kann jede Art eines elektrischen Verbrauchers umfassen, welcher sich von außen ansteuern lässt, insbesondere eine Klappe mit einem eigenen Klappen-Antrieb, ein Ventil mit einem eigenen Ventil-Antrieb, ein Stellantrieb für einen beweglichen Bestandteil des Wasserfahrzeugs, ein lokales Steuergerät, einen Sensor oder einen Aktor, z.B. ein Greifer. Das elektrische Verbraucher-Modul kann als Reaktion auf den Erhalt der Anweisung seinen Zustand verändern, beispielsweise die Position eines Bauteils verändern. Möglich ist auch, dass das elektrische Verbraucher-Modul als Reaktion auf die Anweisung einen Sensorwert an das zentrale Steuergerät übermittelt.

Nachfolgend ist das erfindungsgemäße Wasserfahrzeug anhand eines in den Zeichnungen dargestellten Ausführungsbeispiels näher erläutert. Hierbei zeigen:
Fig. 1 einen Schaltplan für einen Ausschnitt aus dem Netz, wobei der Ausschnitt das zentrale Steuergerät, zwei Kopfstationen, zwei Koppelmodule und zwei Verbraucher-Module umfasst;
Fig. 2 einen Signalflussplan, der die Übermittlung einer Anweisung vom zentralen Steuergerät an das ersten Verbraucher-Modul und einer Meldung vom ersten Verbraucher-Modul an das zentrale Steuergerät veranschaulicht;
Fig. 3 einen Signalflussplan, der Signalflüsse innerhalb des ersten PLC-Koordinators zeigt;
Fig. 4 ein Zustandsübergangsdiagramm für die beiden parallelen Kopfstationen.

Im Ausführungsbeispiel wird die Erfindung an Bord eines militärischen Überwasserschiffs oder Unterwasserfahrzeugs eingesetzt. Dieses Wasserfahrzeug besitzt eine Vielzahl von elektrisch angetriebenen Stellgliedern, z.B. Stellglieder für Klappen oder für Ventile oder für sonstige bewegliche Bestandteile, sowie weitere elektrische Verbraucher, z.B. Meldeleuchten, Sensoren, Steuergeräte sowie Router und sonstige Netzwerk-Komponenten. Die oder wenigstens ein Teil der elektrischen Verbraucher werden mit 115 V oder 230 V und 60 Hz Wechselstrom oder mit 24 V Gleichstrom gemäß dem NATO-Standard STANAG 1008 Ausgabe 9 elektrisch versorgt.

In einer Ausgestaltung erzeugt eine bordeigene Quelle für elektrische Energie, z.B. eine Batterieanlage, eine Brennstoffzellenanlage oder ein Generator, Strom in einer anderen Spannung als von den Verbrauchern benötigt, und ein Umrichter, z. B. ein Gleichrichter oder ein Wechselrichter, erzeugt den Strom mit derjenigen Spannung und gegebenenfalls mit derjenigen Frequenz, in welcher die oder einige elektrischen Verbraucher den Strom benötigen.

Jeweils mehrere elektrische Verbraucher sind zu einer Gruppe von elektrischen Verbrauchern zusammengefasst. Diese Gruppe von Verbrauchern wird im Folgenden als ein Netzsegment bezeichnet. Jedes Netzsegment ist galvanisch von dem Hauptversorgungsnetz getrennt. Durch geeignete Maßnahmen wird vermieden, dass hochfrequente Datensignale, die bei einer Datenübertragung in einem Netzsegment entstehen, in ein anderes Netzsegment gekoppelt werden.

Jedes Netzsegment umfasst mehrere Verbraucher-Baugruppen. Jede Verbraucher-Baugruppe umfasst jeweils mindestens einen elektrischen Verbraucher, z.B. ein Stellglied oder eine Meldeleuchte, optional ein lokales Steuergerät sowie ein Koppelmodul, welches weiter unten erläutert wird. Jede Verbraucher-Baugruppe lässt sich unabhängig von jeder anderen Verbraucher-Baugruppe anschließen und austauschen. Jede Verbraucher-Baugruppe ist an das bordeigene Stromversorgungsnetz angeschlossen und wird dadurch mit Strom in der benötigten Spannung versorgt. Das Koppelmodul umfasst eine lösbare elektrische Verbindung, z.B. einen elektrischen Stecker, der sich in eine korrespondierende Steckdose stecken lässt, oder umgekehrt eine Steckdose für einen Stecker.

Jedes Netzsegment umfasst weiterhin zwei parallel angeordnete und redundant ausgestaltete Kopfstationen. Jede Kopfstation allein vermag die gesamte im Folgenden beschriebene Arbeit für das Netzsegment alleine auszuführen. Im Ausführungsbeispiel umfasst jede Verbraucher-Baugruppe bevorzugt weiterhin einen Speicher für elektrische Energie. Dieser Energiespeicher erhöht die Betriebssicherheit bei einer Unterbrechung der Spannungsversorgung, was weiter unten erläutert wird.

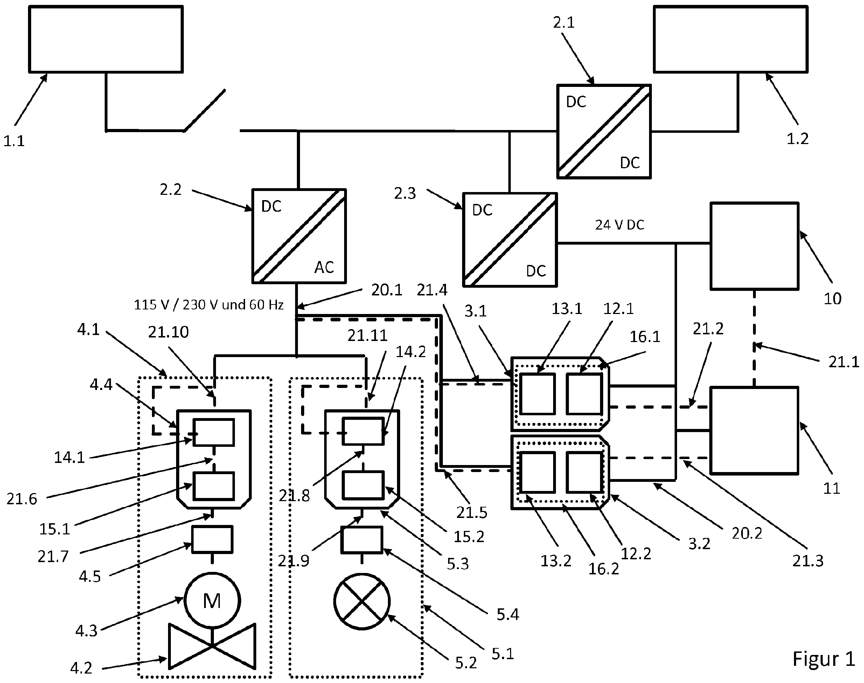

In Fig. 1 wird beispielhaft ein Ausschnitt aus dem Bordnetz gezeigt. Dieser Ausschnitt zeigt beispielhaft ein Netzsegment mit zwei parallel angeordneten Verbraucher-Baugruppen. Gezeigt werden folgende Bestandteile:
- zwei parallel angeordnete Spannungsquellen 1.1 und 1.2, die im Ausführungsbeispiel Gleichspannung liefern, wobei aktuell die erste Spannungsquelle 1.1 vom Netz getrennt ist,
- ein erster Gleichspannungswandler 2.1, welcher Gleichstrom von der Spannungsquelle 1.2 umwandelt,
- ein zweiter Spannungswandler 2.2, der Gleichstrom von der ersten Spannungsquelle 1.1 oder von dem ersten Gleichspannungswandler 2.1 in Wechselstrom mit 115 oder 230 V und 60 Hz umwandelt,
- ein dritter Gleichspannungswandler 2.3, der Gleichstrom von der ersten Spannungsquelle 1.1 oder von dem ersten Gleichspannungswandler 2.1 in Gleichstrom mit 24 V umwandelt,
- zwei parallel angeordnete Kopfstationen 3.1 und 3.2,
- eine erste Verbraucher-Baugruppe 4.1 mit einer Klappe 4.2, einem Stellantrieb 4.3 für die Klappe 4.2, einem ersten Koppelmodul 4.4, einem ersten lokalen Steuergerät 4.5 und einem nicht gezeigten ersten Energiespeicher,
- eine zweite Verbraucher-Baugruppe 5.1 mit einer Meldeleuchte 5.2, einem zweiten Koppelmodul 5.3, einem zweiten lokalen Steuergerät 5.4 und einem nicht gezeigten zweiten Energiespeicher,
- ein zentrales Steuergerät 10, welches für dieses Netzsegment und bevorzugt für mindestens ein weiteres Netzsegment zuständig ist, und
- ein Feldbus-Master 11, der für das Netzsegment mit den beiden Verbraucher-Baugruppen 4.1 und 5.1 zuständig ist.

Jede Kopfstation 3.1, 3.2 umfasst jeweils einen PLC-Koordinator 16.1, 16.2. PLC bedeutet "Power Line Communication". Jeder PLC-Koordinator 16.1, 16.2 umfasst jeweils ein PLC-Steuergerät 12.1, 12.2 und ein PLC-Modem 13.1, 13.2. Jedes Koppelmodul 4.4, 5.3 umfasst jeweils einen PLC-Client 14.1, 14.2 und einen Feldbus-Slave 15.1, 15.2.

Fig. 1 zeigt folgende Bestandteile eines Datenverbindungs-Systems:
- den Feldbus-Master 11,
- die erste Kopfstation 3.1 mit dem ersten PLC-Koordinator 16.1,
- die zweite Kopfstation 3.2 mit dem zweiten PLC-Koordinator 16.2,
- das erste Koppelmodul 4.4 mit dem ersten PLC-Client 14.1 und dem ersten Feldbus-Slave 15.1,
- das zweite Koppelmodul 5.3 mit dem zweiten PLC-Client 14.2 und dem zweiten Feldbus-Slave 15.2,
- eine Steuergerät-Feldbus-Datenverbindung 21.1, welche das zentrale Steuergerät 10 mit dem Feldbus-Master 11 verbindet,
- eine erste Feldbus-Kopfstation-Datenverbindung 21.2, welche den Feldbus-Master 11 mit dem ersten PLC-Koordinator 16.1 verbindet und als Feldbus-Verbindung ausgelegt ist,
- eine zweite Feldbus-Kopfstation-Datenverbindung 21.3, welche den Feldbus-Master 11 mit dem zweiten PLC-Koordinator 16.2 verbindet und als Feldbus-Verbindung ausgelegt ist,
- eine erste Kopfstation-Stromversorgungsnetz-Datenverbindung 21.4, welche den ersten PLC-Koordinator 16.1 mit dem ersten Teil 20.1 des Stromversorgungsnetzes verbindet und als Feldbus-Verbindung ausgelegt ist,
- eine zweite Kopfstation-Stromversorgungsnetz-Datenverbindung 21.5, welche den zweiten PLC-Koordinator 16.2 mit dem ersten Teil 20.1 des Stromversorgungsnetzes verbindet und als Feldbus-Verbindung ausgelegt ist,
- eine erste Koppelmodul-Feldbus-Datenverbindung 21.6, welche den ersten PLC-Client 14.1 mit dem ersten Feldbus-Slave 15.1 verbindet und als Feldbus-Verbindung ausgelegt ist,
- eine erste Slave-Verbraucher-Datenverbindung 21.7, welche den ersten Feldbus-Slave 15.1 mit dem ersten lokalen Steuergerät 4.5 verbindet,
- eine zweite Koppelmodul-Feldbus-Datenverbindung 21.8, welche den zweiten PLC-Client 14.2 mit dem zweiten Feldbus-Slave 15.2 verbindet und als Feldbus-Verbindung ausgelegt ist,
- eine zweite Slave-Verbraucher-Datenverbindung 21.9, welche den zweiten Feldbus-Slave 15.2 mit dem zweiten lokalen Steuergerät 5.4 verbindet,
- eine erste Koppelmodul-Stromnetz-Datenverbindung 21.10, welche den ersten PLC-Client 14.1 mit dem ersten Teil 20.1 des Stromversorgungsnetzes verbindet, und
- eine zweite Koppelmodul-Stromnetz-Datenverbindung 21.11, welche den zweiten PLC-Client 14.2 mit dem ersten Teil 20.1 des Stromversorgungsnetzes verbindet.

In Fig. 1 werden elektrische Verbindungen, die zur Spannungsversorgung dienen, mit durchgezogenen Linien gezeigt und Datenverbindungen mit gestrichelten Linien. Die zweite Spannungsquelle 1.2 versorgt die elektrischen Verbraucher 4.3 und 5.2, das zentrale Steuergerät 10, den Feldbus-Master 11, die beiden Kopfstationen 3.1 und 3.2 sowie die beiden Koppelmodule 4.4 und 5.3 und die beiden lokalen Steuergeräte 4.5, 5.4 mit dem jeweils benötigten Strom.

Der beiden Kopfstationen 3.1 und 3.2 sind parallel zueinander angeordnet. Falls beide Kopfstationen 3.1 und 3.2 funktionsfähig sind, so ist die eine Kopfstation aktiv, und die andere Kopfstation steht in Reserve. Im Folgenden ist die erste Kopfstation 3.1 die aktive Kopfstation, solange nichts anderes vermerkt ist.

Das zentrale Steuergerät 10 vermag jeden elektrischen Verbraucher 4.3 und 5.2 anzusteuern und umgekehrt Statusmeldungen von den elektrischen Verbrauchern 4.3 und 5.2 zu erhalten und zu verarbeiten. Somit werden in beiden Richtungen Daten zwischen dem zentralen Steuergerät 10 und den elektrischen Verbrauchern 4.3 und 5.2 übertragen. Das zentrale Steuergerät 10 ist mindestens mit dem oder jedem Feldbus-Master 11 über einen Datenbus verbunden. Im Ausführungsbeispiel werden Daten gemäß einem Feldbus-Standard übertragen.

Der Energiespeicher der ersten Verbraucher-Baugruppe 4.1 stellt eine Datenübertragung zwischen dem zentralen Steuergerät 10 und dem lokalen Steuergerät 4.5 auch dann sicher, wenn kurzfristig die zentrale Spannungsversorgung der ersten Verbraucher-Baugruppe 4.1 durch eine Spannungsquelle 1.1 oder 1.2 unterbrochen ist. Der erste Energiespeicher versorgt mindestens das erste Koppelmodul 4.4 und das erste lokale Steuergerät 4.5 während der üblichen Dauer einer Spannungsunterbrechung. Dadurch verhindert der Energiespeicher eine Unterbrechung der Datenübertragung und trägt zur kritischen Systemstabilität bei. Entsprechend versorgt der zweite Energiespeicher mindestens das zweite Koppelmodul 5.3 und das zweite lokale Steuergerät 5.4 für die Dauer der Unterbrechung.

Lösungsgemäß werden Daten zwischen dem zentralen Steuergerät 10 und einen elektrischen Verbraucher 4.3 und 5.2 nicht ausschließlich über spezielle Datenleitungen, sondern über einen Teil der Übertragungsstrecke mittels elektrischer Verbindungen des Stromversorgungsnetzes übertragen (Power Line Communication, PLC). Daher sind die beiden Kopfstationen 3.1 und 3.2 mit den Koppelmodulen 4.1 und 5.1 dieses Netzsegments nicht über spezielle Datenleitungen, sondern nur über Stromleitungen des bordeigenen Stromversorgungsnetzes verbunden, durch welche im Ausführungsbeispiel Wechselstrom fließt. Möglich ist auch, Stromleitungen für Gleichstrom zu verwenden. Weil die elektrischen Verbindungen, die zur Stromversorgung verwendet werden, zur Stromversorgung und zusätzlich zur Datenübertragung benutzt werden, wird die Notwendigkeit vermieden, spezielle Datenleitungen verlegen zu müssen. Dies reduziert den Verkabelungsaufwand und die Anzahl erforderlicher Stecker und Steckdosen, weil nur eine Stecker-Steckdose-Kombination für Strom und für Daten zur Verfügung gestellt zu werden braucht.

In einer Ausgestaltung wird zur Datenübertragung das Verfahren G3-PLC verwendet, welches unter der Bezeichnung ITU-T G.9903 standardisiert wurde. Die Frequenz, mit welcher Daten über Stromverbindungen übertragen werden, ist im Ausführungsbeispiel so niedrig, dass eine unerwünschte Abstrahlung von Funkwellen so niedrig wie möglich gehalten wird und die Datenübertragungsrate trotzdem ausreichend hoch ist. Sie liegt bevorzugt unter 500 kHz. Außerdem wird die Datenübertragung auch über die Stromverbindungen gemäß eines Feldbus-Standards durchgeführt. Die Übertragung mittels eines Feldbus-Standards lässt sich gleichermaßen für Datenübertragung mittels spezieller Signalkabel als auch für Datenübertragung über Stromkabel des Stromversorgungsnetzes anwenden.

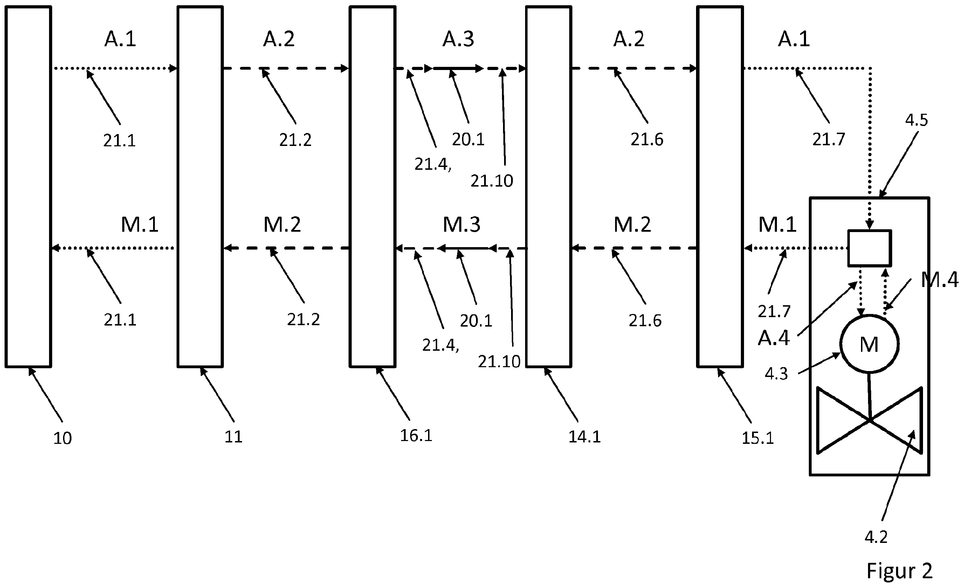

Fig. 2 zeigt beispielhaft mehrere hierarchisch angeordnete Bestandteile des Datennetzes, nämlich
- das zentrale Steuergerät 10, welches im Ausführungsbeispiel für alle Netzsegmente zuständig ist,
- den Feldbus-Master 11, der für mindestens ein Netzsegment zuständig ist,
- den PLC-Koordinator 16.1 der aktuell aktiven ersten Kopfstation 3.1,
- den PLC-Client 14.1 des ersten Koppelmoduls 4.4,
- den Feldbus-Slave 15.1 des ersten Koppelmoduls 4.4,
- ein erstes lokales Steuergerät 4.5, welches den Stellantrieb 4.3 für die Klappe 4.2 ansteuert und zur ersten Verbraucher-Baugruppe 4.1 gehört,
- den Stellantrieb 4.3 und
- die Klappe 4.2.

Das zentrale Steuergerät 10 generiert Stellbefehle für die ansteuerbaren elektrischen Verbraucher, um z.B. eine Klappe oder ein Ventil zu öffnen oder um einen Sensor zu aktivieren oder abzufragen. Umgekehrt erhält das zentrale Steuergerät 10 Statusmeldungen von Verbrauchern, z.B. die Stellung einer Klappe oder eines Ventils, eine Bestätigung von einem Stellglied oder einen Sensorwert. Das zentrale Steuergerät 10 arbeitet weitgehend unabhängig von den verwendeten Datenübertragungsverfahren.

Der Feldbus-Master 11 setzt eine vom zentralen Steuergerät 10 erhaltene Anweisung in einen Feldbus-Anweisung um und setzt umgekehrt eine erhaltene Feldbus-Meldung in eine Meldung an das zentrale Steuergerät 10 um.

In Fig. 2 wird beispielhaft gezeigt, wie eine Anweisung vom zentralen Steuergerät 10 an das lokales Steuergerät 4.5 übertragen wird, um zu bewirken, dass der Stellantrieb 4.3 die Klappe 4.2 bewegt. Umgekehrt wird eine Meldung vom lokalen Steuergerät 4.5, z.B. die erzielte Stellung der Klappe 4.2, an das zentrale Steuergerät 10 übertragen. In Fig. 2 sind diejenigen Befehle, die über eine Stromleitung übertragen werden, mit durchgezogenen Linien dargestellt, die Befehle, die über eine Feldbus-Datenverbindung übertragen werden, mit gestrichelten Linien und diejenigen Befehle, die über eine sonstige Datenverbindung übertragen werden, mit punktierten Linien.

Im Einzelnen werden folgende Schritte durchgeführt:
- Das zentrale Steuergerät 10 erzeugt eine Anweisung A.1, welche das zu verändernde Netzsegment, das anzusteuernde Gerät (hier die erste Verbraucher-Baugruppe 4.1) dieses Netzsegments und die durchzuführende Handlung (hier: Klappe 4.2 öffnen oder schließen) spezifiziert.
- Diese Anweisung A.1 schickt das zentrale Steuergerät 10 auf den Datenbus und damit auf die Steuergerät-Feldbus-Datenverbindung 21.1. Der Feldbus-Master 11 erkennt, dass die Anweisung A.1 für "sein" Netzsegment bestimmt ist.
- Der Feldbus-Master 11 erzeugt als Reaktion auf den Erhalt der Anweisung A.1 eine Feldbus-Anweisung A.2. Diese Feldbus-Anweisung A.2 enthält eine Kennung des anzusteuernden Geräts 4.2 und eine Kennung der durchzuführenden Handlung.
- Der Feldbus-Befehl A.2 wird über die erste Feldbus-Kopfstation-Datenverbindung 21.2, die als Feldbus-Verbindung ausgestaltet ist, an den PLC-Koordinator 16.1 übermittelt.
- Der PLC-Koordinator 16.1 setzt die erhaltene Feldbus-Anweisung A.2 in ein Feldbus-Anweisungs-Signal A.3 um, welches sich mittels PLC über das Stromversorgungsnetz übertragen lässt. Beispielsweise wird das Feldbus-BefehlsSignal A.3 dem übertragenen Wechselstrom aufmoduliert.
- Das Feldbus-Anweisung-Signal A.3 wird über die erste Kopfstation-Stromnetz-Datenverbindung 21.4, den ersten Teil 20.1 des Stromversorgungsnetzes und die erste Koppelmodul-Stromnetz-Datenverbindung 21.10 an den ersten PLC-Client 14.1 des Koppelmoduls 4.4 übertragen. Diese drei Verbindungen 21.4, 20.1, 21.10 stellen eine durchgehende Feldbus-Verbindung bereit, nämlich eine Verbindung, die für das Feldbus-System "durchsichtig" ist.
- Der PLC-Client 14.1 rekonstruiert aus dem erhaltenen Feldbus-Anweisungs-Signal A.3 wieder die Feldbus-Anweisung A.2.
- Die rekonstruierte Feldbus-Anweisung A.2 wird über die erste Koppelmodul-Feldbus-Datenverbindung 21.6, die im ersten Koppelmodul 4.4 angeordnet ist, vom ersten PLC-Client 14.1 an den Feldbus-Slave 15.1 übermittelt.
- Der Feldbus-Slave 15.1 rekonstruiert aus dem Feldbus-Anweisung A.2 die ursprüngliche Anweisung A.1 für das lokale Steuergerät 4.5.
- Die rekonstruierte Anweisung A.1 wird über die erste Slave-Verbraucher-Datenverbindung 21.7, die ebenfalls im ersten Koppelmodul 4.4 angeordnet ist, an das lokale Steuergerät 4.5 übermittelt.
- Das lokale Steuergerät 4.5 erzeugt abhängig von der erhaltenen Anweisung A.1 eine gerätespezifische Anweisung A.4 und steuert den Stellantrieb 4.3 entsprechend der erzeugten gerätespezifischen Anweisung A.4 an.
- Der angesteuerte Stellantrieb 4.3 verstellt die Klappe 4.2.
- Als Reaktion erzeugt der Stellantrieb 4.3 oder ein Positionssensor für die Klappe 4.2 eine gerätespezifische Meldung M.4 in Form einer gerätespezifischen Statusmeldung oder Bestätigung.
- Das lokale Steuergerät 4.5 erzeugt abhängig von der gerätespezifischen Meldung M.4 eine Meldung M.1 für das zentrale Steuergerät 10.
- Diese Meldung M.1 wird über die erste Slave-Verbraucher-Datenverbindung 21.7 an den ersten Feldbus-Slave 15.1 übermittelt.
- Der erste Feldbus-Slave 15.1 erzeugt aus der Meldung M.1 eine Feldbus-Meldung M.2, welche eine Kennung des angesteuerten Geräts 4.2 und eine Kennung der Meldung umfasst.
- Diese Feldbus-Meldung M.2 wird über die erste Koppelmodul-Feldbus-Datenverbindung 21.6 an den PLC-Client 14.1 übermittelt.
- Der PLC-Client 14.1 erzeugt aus der erhaltenen Feldbus-Meldung M.2 ein Feldbus-Meldungs-Signal M.3, welches sich mittels PLC über ein Stromversorgungsnetz übertragen lässt. Dieses Feldbus-Meldungs-Signal M.3 wird über die erste Koppelmodul-Stromnetz-Datenverbindung 21.10, den ersten Teil 20.1 des Stromversorgungsnetzes und die erste Kopfstation-Stromnetz-Datenverbindung 21.4 an den ersten PLC-Koordinator 16.1 übermittelt.
- Der erste PLC-Koordinator 16.1 rekonstruiert aus dem Feldbus-Meldungs-Signal M.3 wieder die Feldbus-Meldung M.2.
- Die rekonstruierte Feldbus-Meldung M.2 wird über die erste Feldbus-Kopfstation-Datenverbindung 21.2 vom ersten PLC-Koordinator 16.1 an den Feldbus-Master 11 übermittelt.
- Der Feldbus-Master 11 erhält die Feldbus-Meldung M.2 und rekonstruiert aus der Feldbus-Meldung M.2 der ursprüngliche Meldung M.1.
- Die rekonstruierte Meldung M.1 wird über die Steuergerät-Feldbus-Datenverbindung 21.1 an das zentrale Steuergerät 10 übertragen.

Wie bereits dargelegt, sind zwei redundante Kopfstationen 3.1, 3.2 für ein Netzsegment mit mehreren ansteuerbaren elektrischen Verbrauchern zuständig. Jede Kopfstation 3.1, 3.2 vermag alleine die erforderlichen Schritte für das Netzsegment durchführen. In einer Ausgestaltung umfasst jede Kopfstation 3.1, 3.2 jeweils einen PLC-Koordinator 16.1, 16.2 und pro angeschlossenem elektrischen Verbraucher - genauer: pro angeschlossenem Feldbus-Slave - jeweils einen PLC-Client 14.1, 14.2. Der PLC-Koordinator 16.1, 16.2 steht bei störungsfreiem Betrieb wenigstens zeitweise mit jedem PLC-Client des Netzsegments in Verbindung. Bei der Initialisierung wählt sich jeder verbundene PLC-Client beim PLC-Koordinator 16.1 oder 16.2 ein und registriert sich dadurch automatisch, so dass ein Datenaustausch möglich ist.

In einer Ausgestaltung ist der PLC-Koordinator 16.1, 16.2 in ein PLC-Steuergerät 12.1, 12.2 und ein PLC-Modem 13.1, 13.2 unterteilt. Das PLC-Modem 13.1, 13.2 realisiert einen Chipsatz, welcher grundlegende Funktionen zur Datenübertragung bereitgestellt. Das PLC-Steuergerät 12.1, 12.2 realisiert alle weiteren Funktionen und fungiert als ein Steuergerät für das PLC-Modem 13.1, 13.2.

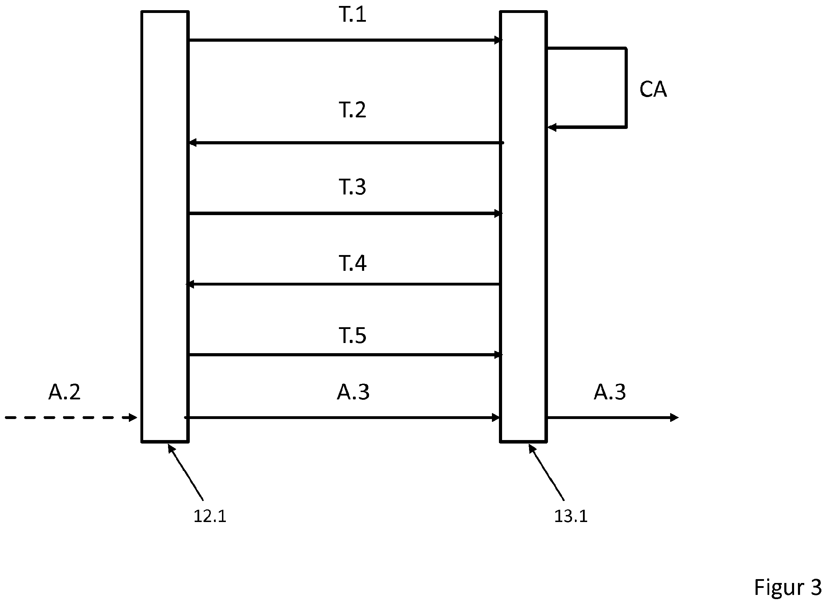

In Fig. 3 wird der Datenaustausch dargestellt, welcher beim Initialisieren und beim Betrieb des PLC-Koordinators 16.1 durchgeführt wird. Links ist das PLC-Steuergerät 12.1 gezeigt, rechts das PLC-Modem 13.1. Die Signale T.1 bis T.4 werden beim Initialisieren ausgetauscht, das Signal T.5 im laufenden Betrieb, bei Bedarf auch wiederholt. Die Signale haben folgende Bedeutung:
- Das PLC-Steuergerät 12.1 sendet ein Aktivierungssignal T.1 an das PLC-Modem 13.1. Das PLC-Modem 13.1 registriert die Aktivitäten auf dem Netzsegment (Pfeil CA - Channel Assessment), und das PLC-Modem 13.1 sendet ein Bestätigungssignal T.2 an das PLC-Steuergerät 12.1.
- Das PLC-Steuergerät 12.1 sendet ein Befehlssignal T.3 an das PLC-Modem 13.1, damit dieses ein Personal Area Network (PAN) mit den Feldbus-Slaves des Netzsegments aufbaut. Das PLC-Modem 13.1 sendet daraufhin Signale an die PLC-Clients, welche diese Signale an die Feldbus-Slaves weitergeben. Die Feldbus-Slaves veranlassen, dass die PLC-Clients 14.1, 14.2 sich automatisch beim PLC-Modem 13.1 registrieren. Das PLC-Modem 13.1 stellt fest, welche PLC-Clients 14.1, 14.2 sich beim PLC-Modem 13.1 angemeldet haben. Das PLC-Modem 13.1 sendet ein Bestätigungssignal T.4 mit Kennungen der registrierten PLC-Clients an das PLC-Steuergerät 12.1.
- Bei Bedarf oder periodisch mit fester Rate sendet das PLC-Steuergerät 12.1 im laufenden Betrieb ein Signal T.5 an das PLC-Modem 13.1, um mindestens ein Netzwerkparameter in einem PLC-Client 14.1, 14.2 abzufragen, zu verändern oder auf andere Weise zu verwalten.

Das PLC-Steuergerät 12.1 erhält einen Feldbus-Befehl A.2 und setzt diesen in ein Feldbus-Befehls-Signal A.3 um, welches sich mittels PLC über eine Stromverbindung übertragen lässt. Das PLC-Modem 13.1 sendet diesen an den spezifizierten PLC-Client 14.1, 14.2.

Das PLC-Steuergerät 12.1, 12.2 veranlasst periodisch, dass das PLC-Modem 13.1, 13.2 die Aktivitäten im PLC-Netz des Netzsegments misst. Das PLC-Modem 13.1, 13.2 übermittelt Statusmeldungen an das PLC-Steuergerät 12.1, 12.2. Falls dem PLC-Steuergerät 12.1, 12.2 keine Aktivität mitgeteilt wird, so löst das PLC-Steuergerät 12.1, 12.2 den Versuch aus, erneut ein Netzwerk mit den PLC-Clients des Netzsegments aufzubauen. Jeder PLC-Client erhält einen Aktivierungsbefehl, und das PLC-Modem registriert den PLC-Client im PLC-Netz.

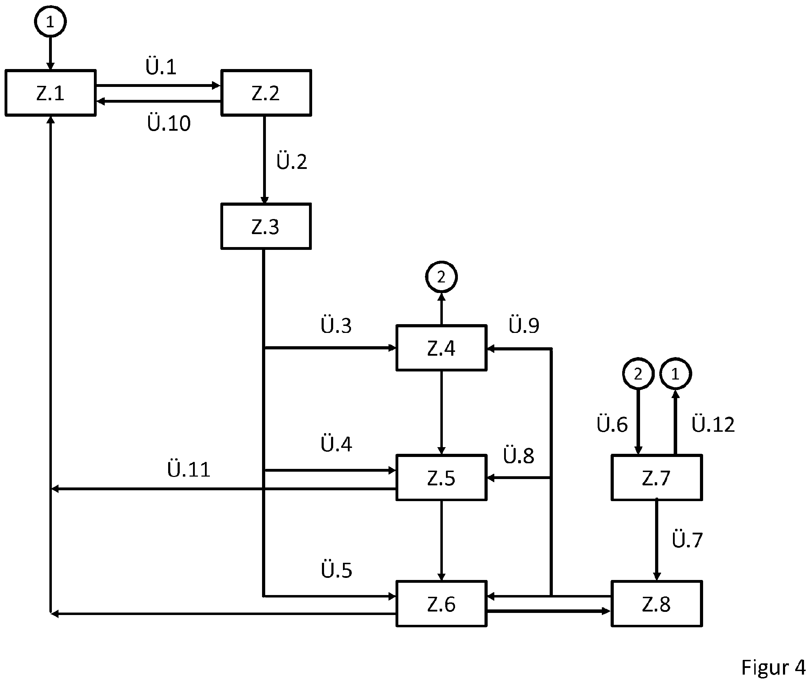

Fig. 4 zeigt ein Zustandsübergangsdiagramm für die PLC-Bestandteile, welche die Datenübermittlung für ein Netzsegment durchführen, mit den nachfolgend beschriebenen Zuständen. Das Diagramm bezieht sich auf zwei parallele Kopfstationen 3.1, 3.2 mit jeweils einem PLC-Koordinator 16.1, 16.2 und mehreren PLC-Clients 14.1, 14.2. Folgende Zustände werden erreicht:
- Zustand Z.1 ("offline oder Gerätefehler"): Beide PLC-Koordinatoren 16.1, 16.2 sowie die PLC-Clients 14.1, 14.2 sind inaktiv, z.B. ausgeschaltet oder ausgefallen. Eine Übermittlung von Daten ist nicht möglich.
- Falls das Feldbussystem sowie mindestens ein PLC-Koordinator funktionsfähig sind, so ist ein Übergang in den Zustand Z.2 möglich (Übergang Ü.1).
- Zustand Z.2 ("Koordinator-Setup"): Ein PLC-Koordinator 16.1, 16.2 wird gerade in den aktiven Zustand überführt. Falls beide PLC-Koordinatoren 16.1 und 16.2 funktionsfähig sind, so wird ein PLC-Koordinator 16.1, 16.2 gemäß einer vorgegebenen Auswahlvorschrift ausgewählt, z.B. abhängig von der bisherigen Nutzungsdauer, der eigenen Temperatur oder der Umgebungstemperatur oder der Position an Bord des Wasserfahrzeugs. Falls nur ein PLC-Koordinator funktionsfähig ist, so wird dieser ausgewählt. Im folgenden Beispiel wird der PLC-Koordinator 16.1 aktiviert. Die PLC-Clients sind noch nicht verbunden, und eine Datenübermittlung ist nicht möglich. Falls beide PLC-Koordinatoren 16.1, 16.2 nicht funktionsfähig sind, geht es in den Zustand Z.1 (Übergang Ü.10).
- Sobald der einzig funktionsfähige oder der ausgewählte PLC-Koordinator 16.1 aktiv ist und z.B. "hochgefahren" ist, so wird in den Zustand Z.3 übergegangen (Übergang Ü.2).
- Zustand Z.3 ("Client-Setup"): Ein PLC-Koordinator 16.1 ist aktiv. Die PLC-Clients wählen sich in das PLC-Netz ein. Eine Datenkommunikation ist noch nicht möglich.
- Falls sich die PLC-Clients erfolgreich eingewählt haben und der andere PLC-Koordinator 16.2 ebenfalls funktionsfähig ist, also im Stand-by ist, so geht es im Zustand Z.4 weiter (Übergang Ü.3).
- Falls die PLC-Clients sich eingewählt haben, aber der andere PLC-Koordinator 16.2 nicht funktionsfähig ist, so wird im Zustand Z.5 fortgefahren (Übergang Ü.4).
- Falls die PLC-Clients sich nicht einwählen konnten, so geht es im Zustand Z.6 weiter (Übergang Ü.5)
- Zustand Z.4 ("normal"): Alle PLC-Clients sind mit dem aktiven PLC-Koordinator 16.1 verbunden. Der andere PLC-Koordinator 16.2 ist funktionsfähig und im Stand-by. Daten lassen sich zwischen dem Feldbus-Master 11 und jedem Feldbus-Slave 15.1, 15.2 des Netzsegments austauschen, und zwar über den aktiven PLC-Koordinator 16.1 und den jeweiligen PLC-Client 14.1, 14.2.
- Zustand Z.5 ("gefährdet"): Weil der nicht aktive PLC-Koordinator 16.2 ausgefallen ist, steht keine Redundanz mehr bereit. Solange der aktive PLC-Koordinator 16.1 funktionsfähig bleibt, ist eine Datenübermittlung wie in Zustand Z.4 möglich. Falls auch noch der aktive PLC-Koordinator 16.1 ausfällt, so fällt dieses Netzsegment in den Zustand Z.1 (Übergang Ü.11).
- Zustand Z.6 ("Netzfehler"): Die PLC-Clients können sich nicht in das PLC-Netz einwählen, obwohl mindestens ein PLC-Koordinator 16.1 funktionsfähig und aktiv ist. Der andere PLC-Koordinator 16.2 kann ausgefallen oder ebenfalls funktionsfähig sein. Daten können im Zustand Z.6 nicht übertragen werden.
- Das PLC-Netz kann in den Zustand Z.7 übergehen, nämlich dann, wenn ein PLC-Koordinator ausgefallen ist und der andere PLC-Koordinator funktionsfähig ist.
- Zustand Z.7 ("PLC-Koordinatoren im Übergang"): In diesem Zustand ist der zuvor aktive PLC-Koordinator 16.1 ausgefallen (Übergang Ü.6 aus dem Zustand Z.4). Der andere PLC-Koordinator 16.2 ist funktionsfähig und wird gerade gestartet (Set-up). Die PLC-Clients sind noch nicht im PLC-Netz. Daten können nicht übertragen werden.
- Sobald der andere PLC-Koordinator 16.2 aktiv ist, geht es im Zustand Z.8 weiter (Übergang Ü.7). Falls der andere PLC-Koordinator 16.2 nicht aktiviert werden kann, geht es im Zustand Z.1 weiter (Übergang Ü.12).
- Zustand Z.8 ("Clients im Übergang"): In diesem Zustand ist der funktionsfähige PLC-Koordinator 16.2 aktiviert. Die PLC-Clients wählen sich in das nun gebildete PLC-Netz ein. Falls dies möglich ist, geht es im Zustand Z.5 weiter, d.h. der ausgefallene PLC-Koordinator 16.1 bleibt ausgefallen (Übergang Ü.8) oder im Zustand Z.4 (der ausgefallene PLC-Koordinator 16.1 wird wieder funktionstüchtig (Übergang Ü.9). Daten können im Zustand Z.8 noch nicht übertragen werden.

Im Ausführungsbeispiel arbeiten die beiden parallelen Kopfstationen 3.1 und 3.2 autonom, d.h. unabhängig von Befehlen eines übergeordneten Steuergeräts 10. In einer Ausgestaltung ist den Kopfstationen 3.1 und 3.2 mindestens ein lokales Steuergerät zugeordnet. Beispielsweise steht dasselbe Steuergerät in Datenverbindung mit beiden Kopfstationen 3.1 und 3.2. Oder jede Kopfstation 3.1 und 3.2 besitzt ein eigenes lokales Steuergerät, bevorzugt das PLC-Steuergerät 12.1, 12.2 des PLC-Koordinators 16.1, 16.2. Bevorzugt ist jedes PLC-Steuergerät 12.1, 12.2 in Datenverbindung mit dem anderen PLC-Steuergerät 12.2, 12.1 und vermag festzustellen, ob die andere Kopfstation und somit das andere PLC-Steuergerät 12.2, 12.1 funktionsfähig ist und auf eine Anfrage antwortet oder nicht.

In beiden Ausgestaltungen vermag das oder jedes lokale Steuergerät automatisch und ohne eine übergeordnete Steuerung die Zustände, die in dem Zustandsübergangsdiagramm von Fig. 4 gezeigt werden, festzustellen und die gezeigten Zustandsübergänge zu bewirken. In einer Ausgestaltung vermag jedes PLC-Steuergerät 12.1, 12.2 unabhängig von dem anderen PLC-Steuergerät 12.2, 12.1 diese Zustände zu erkennen und diese Zustandsübergänge zu bewirken. Dadurch wird insbesondere erreicht, dass nach einem Ausfall einer Kopfstation 4.1 rasch die andere Kopfstation 4.2 die Aufgaben der ausgefallenen Kopfstation 4.1 übernimmt.

**Bezugszeichen**

| | |
|---|---|
| 1.1, 1.2 | bordeigene Spannungsquellen, versorgen die Verbraucher-Module 4.1, 5.1 mit Wechselstrom und das zentrale Steuergerät 10 und die Geräte des Datenverbindungs-System mit Gleichstrom |
| 2.1 | erster Gleichspannungswandler, wandelt Gleichspannung von der Spannungsquelle 1.2 um |
| 2.2 | zweiter Spannungswandler, wandelt Gleichspannung in Wechselstrom mit 115 V/230 V und 60 Hz um |
| 2.3 | dritter Gleichspannungswandler, wandelt Gleichspannung in Gleichspannung mit 24 V um. |
| 3.1. 3.2 | parallele Kopfstationen, umfassen einen PLC-Koordinator 16.1, 16.2 mit einem PLC-Steuergerät 12.1, 12.2 und einem PLC-Modem 13.1, 13.2 |
| 4.1 | erste Verbraucher-Baugruppe, umfasst die Klappe 4.2, den Stellantrieb 4.3, das erste Koppelmodul 4.4 und das erste lokale Steuergerät 4.5 |
| 4.2 | Klappe, gehört zur ersten Verbraucher-Baugruppe 4.1 |
| 4.3 | elektrisch angetriebener Stellantrieb für die Klappe 4.2 |
| 4.4 | Koppelmodul der ersten Verbraucher-Baugruppe 4.1, umfasst das PLC-Steuergerät 12.1 und das PLC-Modem 13.1 |
| 4.5 | lokales Steuergerät der ersten Verbraucher-Baugruppe 4.1, steuert den Stellantrieb 4.3 an |
| 5.1 | zweite Verbraucher-Baugruppe, umfasst die Meldeleuchte 5.2, das zweite Koppelmodul 4.3 und das zweite lokale Steuergerät 5.4 |
| 5.2 | Meldeleuchte, gehört zur zweiten Verbraucher-Baugruppe 4.2 |
| 5.3 | Koppelmodul der zweiten Verbraucher-Baugruppe 4.2, umfasst das PLC-Steuergerät 12.2 und das PLC-Modem 13.2 |
| 10 | zentrales Steuergerät, für mehrere Netzsegmente zuständig, erzeugt die Anweisung A.1, verarbeitet die Meldung M.1 |
| 11 | Feldbus-Master, für ein Netzsegment zuständig |
| 12.1, 12.2 | PLC-Steuergerät des PLC-Koordinators 16.1, 16.2 der Kopfstation 3.1, 3.2 |
| 13.1, 13.2 | PLC-Modem des PLC-Koordinators 16.1, 16.2 der Kopfstation 3.1, 3.2 |
| 14.1, 14.2 | PLC-Client des Koppelmoduls 4.4, 5.3 |
| 15.1, 15.2 | Feldbus-Slave des Koppelmoduls 4.4, 5.3 |
| 16.1, 16.2 | PLC-Koordinator der Kopfstation 3.1, 3.2, umfasst das PLC-Steuergerät 12.1, 12.2 und das PLC-Modem 13.1, 13.2 |
| 20.1 | erster Teil des Stromversorgungsnetzes, versorgt elektrische Verbraucher mit 115 V / 230 V und 60 Hz Wechselstrom |
| 20.2 | zweiter Teil des Stromversorgungsnetzes, versorgt das zentrale Steuergerät 10 und Geräte des Datenverbindungs-Systems mit 24 V Gleichstrom |
| 21.1 | Steuergerät-Feldbus-Datenverbindung, verbindet das zentrale Steuergerät 10 mit dem Feldbus-Master 11 |
| 21.2 | erste Feldbus-Kopfstation-Datenverbindung, verbindet den Feldbus-Master 11 mit dem ersten PLC-Koordinator 16.1, als Feldbus-Verbindung ausgelegt |
| 21.3 | zweite Feldbus-Kopfstation-Datenverbindung, verbindet den Feldbus-Master 11 mit der zweiten PLC-Koordinator 16.2, als Feldbus-Verbindung ausgelegt |
| 21.4 | erste Kopfstation-Stromnetz-Datenverbindung, verbindet den ersten PLC-Koordinator 16.1 mit dem ersten Teil 20.1 des Stromversorgungsnetzes, als Feldbus-Verbindung ausgelegt |
| 21.5 | zweite Kopfstation-Stromnetz-Datenverbindung, verbindet den zweiten PLC-Koordinator 16.2 mit dem ersten Teil 20.1 des Stromversorgungsnetzes, als Feldbus-Verbindung ausgelegt |
| 21.6 | erste Koppelmodul-Feldbus-Datenverbindung, verbindet den ersten PLC-Client 14.1 mit dem ersten Feldbus-Slave 15.1, als Feldbus-Verbindung ausgelegt |
| 21.7 | erste Slave-Verbraucher-Datenverbindung, verbindet den ersten Feldbus-Slave 15.1 mit dem ersten lokalen Steuergerät 4.5, als Feldbus-Verbindung |
| | ausgelegt |
| 21.8 | zweite Koppelmodul-Feldbus-Datenverbindung, verbindet den zweiten PLC-Client 14.2 mit dem zweiten Feldbus-Slave 15.2, als Feldbus-Verbindung ausgelegt |
| 21.9 | zweite Slave-Verbraucher-Datenverbindung, verbindet den zweiten Feldbus-Slave 15.2 mit dem zweiten lokalen Steuergerät 5.4 |
| 21.10 | erste Koppelmodul-Stromnetz-Datenverbindung, verbindet den ersten PLC-Client 14.1 mit dem ersten Teil 20.1 des Stromversorgungsnetzes, als Feldbus-Verbindung ausgelegt |
| 21.11 | zweite Koppelmodul-Stromnetz-Datenverbindung, verbindet den zweiten PLC-Client 14.2 mit dem ersten Teil 20.1 des Stromversorgungsnetzes, als Feldbus-Verbindung ausgelegt |
| A.1 | vom zentralen Steuergerät 10 erzeugte Anweisung, spezifiziert das zu verändernde Netzsegment, das anzusteuernde Gerät (erste Verbraucher-Baugruppe 4.1) dieses Netzsegment und die durchzuführende Handlung (Klappe 4.2 verstellen) |
| A.2 | Feldbus-Anweisung, vom Feldbus-Master 11 als Reaktion auf den Erhalt der Anweisung A.1 erzeugt |
| A.3 | Feldbus-Anweisungs-Signal, welches sich mittels PLC über eine Stromverbindung übertragen lässt, vom PLC-Koordinator 16.1 als Reaktion auf den Erhalt der Feldbus-Anweisung A.2 erzeugt |
| A.4 | gerätespezifische Anweisung für das lokale Steuergerät 4.5, vom Feldbus-Slave 15.1 als Reaktion auf den Erhalt des Feldbus-Anweisungs-Signals A.3 erzeugt |
| M.1 | gerätespezifische Meldung in Form einer Statusmeldung oder Bestätigung, vom lokalen Steuergerät 4.5 nach Verstellung der Klappe 4.2 erzeugt |
| M.2 | Feldbus-Meldung, vom Feldbus-Slave 15.1 als Reaktion auf den Erhalt der Meldung M.1 erzeugt |
| M.3 | Feldbus-Meldungs-Signal, welches sich mittels PLC über eine Stromleitung übertragen lässt, vom PLC-Client 14.1 als Reaktion auf den Erhalt der Feldbus-Meldung M.2 erzeugt |
| M.4 | Meldung für das zentrale Steuergerät 10, vom Feldbus-Master 11 als Reaktion auf den Erhalt der Feldbus-Meldung M.2 erzeugt |
| T.1 | Aktivierungssignal, vom PLC-Steuergerät 12.1 an das PLC-Modem 13.1 gesandt |
| T.2 | Bestätigungssignal, vom PLC-Modem 13.1 an das PLC-Steuergerät 12.1 gesandt |
| T.3 | Befehlssignal, vom PLC-Steuergerät 12.1 an das PLC-Modem 13.1 gesandt, damit dieses ein Personal Area Network (PAN) mit den Feldbus-Slaves 15.1, 15.2 des Netzsegments aufbaut |
| T.4 | Bestätigungssignal, vom PLC-Modem 13.1 an das PLC-Steuergerät 12.1 gesandt, umfasst Kennungen der registrierten PLC-Clients 14.1, 14.2 |
| T.5 | Signal, vom PLC-Steuergerät 12.1 an das PLC-Modem 13.1 gesandt, um mindestens einen Netzwerkparameter in einem PLC-Client 14.1, 14.2 zu verändern |
| Z.1 | Zustand "offline oder Gerätefehler": PLC-Koordinatoren 16.1, 16.2 und PLC-Clients 14.1, 14.2 inaktiv |
| Z.2 | Zustand "Koordinator-Setup": Ein PLC-Koordinator 16.1, 16.2 wird gerade in den aktiven Zustand überführt. |
| Z.3 | Zustand "Client-Setup": Ein PLC-Koordinator 16.1 ist aktiv. Die PLC-Clients wählen sich in das PLC-Netz ein. |
| Z.4 | Zustand "normal": Alle PLC-Clients sind mit dem aktiven PLC-Koordinator verbunden. Der andere PLC-Koordinator ist funktionsfähig und im Stand-by. |
| Z.5 | Zustand "gefährdet": aktiver PLC-Koordinator funktionsfähig, nicht aktiver PLC-Koordinator ausgefallen |
| Z.6 | Zustand "Netzfehler": Ein PLC-Koordinator ist aktiv. Die PLC-Clients können sich nicht in das PLC-Netz einwählen. |
| Z.7 | Zustand "PLC-Koordinatoren im Übergang": der zuvor aktive PLC-Koordinator ist ausgefallen. Der andere PLC-Koordinator ist funktionsfähig und wird gerade gestartet. |
| Z.8 | Zustand "Clients im Übergang": funktionsfähige PLC-Koordinator ist aktiviert. Die PLC-Clients wählen sich in das PLC-Netz ein. |

## Patentansprüche

1. Wasserfahrzeug mit
- einem ersten ansteuerbaren elektrischen Verbraucher-Modul (4.3, 4.5),
- einem zentralen Steuergerät (10),
- einem Stromversorgungsnetz (20.1, 20.2) und
- einem Datenverbindungs-System,
wobei das Stromversorgungsnetz (20.1, 20.2) dazu ausgestaltet ist, das erste Verbraucher-Modul (4.3, 4.5) elektrisch zu versorgen,
wobei das zentrale Steuergerät (10) dazu ausgestaltet ist, eine Anweisung (A.1) für das erste Verbraucher-Modul (4.3, 4.5) zu generieren, und
wobei das erste Verbraucher-Modul (4.3, 4.5) dazu ausgestaltet ist, eine empfangene Anweisung (A.1) zu verarbeiten,
wobei das Datenverbindungs-System
- eine erste Kopfstation (3.1),
- ein erstes Koppelmodul (4.4),
- eine erste Steuergerät-Kopfstation-Datenverbindung (21.1, 21.2) zwischen dem zentralen Steuergerät (10) und der ersten Kopfstation (3.1),
- eine erste Kopfstation-Stromnetz-Datenverbindung (21.4) zwischen der ersten Kopfstation (3.1) und dem Stromversorgungsnetz (20.1, 20.2),
- eine erste Koppelmodul-Stromnetz-Datenverbindung (21.10) zwischen dem ersten Koppelmodul (4.4) und dem Stromversorgungsnetz (20.1, 20.2) und
- eine erste Koppelmodul-Verbraucher-Datenverbindung (21.6, 21.7) zwischen dem ersten Koppelmodul (4.4) und dem ersten elektrischen Verbraucher-Modul (4.3, 4.5) umfasst,
**dadurch gekennzeichnet, dass**
die erste Kopfstation (3.1) dazu ausgestaltet ist, eine Anweisung (A.1, A.2), welche über eine Datenverbindung an die erste Kopfstation (3.1) übermittelt ist, in ein Anweisungs-Signal (A.3) umzuwandeln, welches über das Stromversorgungsnetz (20.1, 20.2) übertragbar ist,
wobei das erste Koppelmodul (4.4) dazu ausgestaltet ist, ein über das Stromversorgungsnetz (20.1, 20.2) übertragenes Anweisungs-Signal (A.2, A.3) in eine Anweisung (A.1) umzuwandeln, welche über eine Datenverbindung übermittelbar ist, und
wobei das Wasserfahrzeug dazu ausgestaltet ist,
- eine Anweisung (A.1) vom zentralen Steuergerät (10) über die erste Steuergerät-Kopfstation-Datenverbindung (21.1, 21.2) an die erste Kopfstation (3.1) zu übermitteln,
- die Anweisung (A.1) als ein Anweisungs-Signal (A.2, A.3) von der ersten Kopfstation (3.1) über die erste Kopfstation-Stromnetz-Datenverbindung (21.4), das Stromversorgungsnetz (20.1, 20.2) und die erste Koppelmodul-Stromnetz-Datenverbindung (21.10) an das erste Koppelmodul (4.4) zu übertragen und
- die Anweisung (A.1) vom ersten Koppelmodul (4.4) über die erste Koppelmodul-Verbraucher-Datenverbindung (21.6, 21.7) an das erste elektrische VerbraucherModul (4.3, 4.5) zu übermitteln.

2. Wasserfahrzeug nach Anspruch 1,
**dadurch gekennzeichnet, dass**
das erste elektrische Verbraucher-Modul (4.3, 4.5) dazu ausgestaltet ist, eine Meldung (M.1) für das zentrale Steuergerät (10) zu generieren und
das zentrale Steuergerät (10) dazu ausgestaltet ist, eine empfangene Meldung (M.1) zu verarbeiten,
wobei das erste Koppelmodul (4.4) dazu ausgestaltet ist, eine Meldung (M.1), welche über eine Datenverbindung an das erste Koppelmodul (4.4) übermittelt ist, in ein Meldungs-Signal (M.2, M.3) umzuwandeln, welches über das Stromversorgungsnetz (20.1, 20.2) übertragbar ist,
wobei die erste Kopfstation (3.1) dazu ausgestaltet ist, ein über das Stromversorgungsnetz (20.1, 20.2) übertragenes Meldungs-Signal (M.2, M.3) in eine Meldung (M.1) umzuwandeln, welche über eine Datenverbindung übermittelbar ist, und
wobei das Wasserfahrzeug dazu ausgestaltet ist,
- eine Meldung (M.1) vom ersten Verbraucher-Modul (4.3, 4.5) über die erste Koppelmodul-Verbraucher-Datenverbindung (21.6, 21.7) an das erste Koppelmodul (4.4) zu übermitteln,
- die Meldung (M.1) als ein Meldungs-Signal (M.2, M.3) von dem ersten Koppelmodul (4.4) über die erste Koppelmodul-Stromnetz-Datenverbindung (21.10), das Stromversorgungsnetz (20.1, 20.2) und die erste Kopfstation-Stromnetz-Datenverbindung (21.4) an die erste Kopfstation (3.1) zu übertragen und
- die Meldung (M.1) von der ersten Kopfstation (3.1) über die erste Steuergerät-Kopfstation-Datenverbindung (21.1, 21.2) an das zentrale Steuergerät (10) zu übermitteln.

3. Wasserfahrzeug nach einem der vorstehenden Ansprüche,
**dadurch gekennzeichnet, dass**
das Datenverbindungs-System
- eine zweite Kopfstation (3.2)
- eine zweite Steuergerät-Kopfstation-Datenverbindung (21.1, 21.3) zwischen dem zentralen Steuergerät (10) und der zweiten Kopfstation (3.2) und
- eine zweite Kopfstation-Stromnetz-Datenverbindung (21.5) zwischen der zweiten Kopfstation (3.2) und dem Stromversorgungsnetz (20.1, 20.2)
umfasst,
wobei die zweite Kopfstation (3.2) parallel zur ersten Kopfstation (3.1) angeordnet ist,
wobei die zweite Kopfstation (3.2) dazu ausgestaltet ist, eine Anweisung (A.1), welche über eine Datenverbindung an die zweite Kopfstation (3.2) übermittelt ist, in ein Anweisungs-Signal (A.2, A.3) umzuwandeln, welches über das Stromversorgungsnetz (20.1, 20.2) übertragbar ist, und
wobei das Wasserfahrzeug dazu ausgestaltet ist,
- eine Anweisung (A.1) vom zentralen Steuergerät (10) über die zweite Steuergerät-Kopfstation-Datenverbindung (21.1, 21.3) an die zweite Kopfstation (3.2) zu übermitteln und
- die Anweisung (A.1) als ein Anweisungs-Signal (A.2, A.3) von der zweiten Kopfstation (3.2) über die zweite Kopfstation-Stromnetz-Datenverbindung (21.5), das Stromversorgungsnetz (20.1, 20.2) und die erste Koppelmodul-Stromnetz-Datenverbindung (21.10) an das erste Koppelmodul (4.4) zu übertragen.

4. Wasserfahrzeug nach Anspruch 3,
**dadurch gekennzeichnet, dass**
das Datenverbindungs-System mindestens ein Datenverbindungs-Steuergerät (12.1, 12.2) umfasst,
wobei das oder jedes Datenverbindungs-Steuergerät (12.1, 12.2) dazu ausgestaltet ist,
dann, wenn sowohl die erste Kopfstation (3.1) als auch die zweite Kopfstation (3.2) funktionsfähig sind, eine Kopfstation (3.1) auszuwählen und zu aktivieren, dann, wenn eine Kopfstation (3.1) ausgefallen ist, die andere Kopfstation (3.2) zu aktivieren und
unter Einbeziehung des Stromversorgungsnetzes (20.1, 20.2), der aktivierten Kopfstation (3.1, 3.2) und des ersten Koppelmoduls (4.4)
eine erste Datenverbindung zwischen dem zentralen Steuergerät (10) und dem ersten Verbraucher-Modul (4.3, 4.5) einzurichten.

5. Wasserfahrzeug nach Anspruch 4,
**dadurch gekennzeichnet, dass**
das oder jedes Datenverbindungs-Steuergerät (12.1, 12.2) dazu ausgestaltet ist, dann, wenn nach Einrichtung der ersten Datenverbindung die aktivierte Kopfstation (3.1) ausfällt,
die andere Kopfstation (3.2) zu aktivieren und
unter Einbeziehung des Stromversorgungsnetzes (20.1, 20.2), der aktivierten anderen Kopfstation (3.2) und des ersten Koppelmoduls (4.4) eine zweite Datenverbindung zwischen dem zentralen Steuergerät (10) und dem ersten Verbraucher-Modul (4.3, 4.5) einzurichten.

6. Wasserfahrzeug nach Anspruch 4 oder Anspruch 5,
**dadurch gekennzeichnet, dass**
die erste Kopfstation (3.1) ein erstes Datenverbindungs-Steuergerät (12.1) umfasst und
die zweite Kopfstation (3.2) ein zweites Datenverbindungs-Steuergerät (12.2) umfasst,
wobei jedes Datenverbindungs-Steuergerät (12.1, 12.2) dazu ausgestaltet ist,
- die eigene Kopfstation (3.1, 3.2) zu aktivieren und
- unter Einbeziehung des Stromversorgungsnetzes (20.1, 20.2), der aktivierten eigenen Kopfstation (3.1, 3.2) und des ersten Koppelmoduls (4.4) eine Datenverbindung zwischen dem zentralen Steuergerät (10) und dem ersten Verbraucher-Modul (4.3, 4.5) einzurichten.

7. Wasserfahrzeug nach einem der vorstehenden Ansprüche,
**dadurch gekennzeichnet, dass**
das Wasserfahrzeug ein zweites ansteuerbares elektrisches Verbraucher-Modul (5.2, 5.4) umfasst und
das Datenverbindungs-System
- ein zweites Koppelmodul (5.3),
- eine zweite Koppelmodul-Stromnetz-Datenverbindung (21.11) zwischen dem zweiten Koppelmodul (5.3) und dem Stromversorgungsnetz (20.1, 20.2) und
- eine zweite Koppelmodul-Verbraucher-Datenverbindung (21.8, 21.9) zwischen dem zweiten Koppelmodul (5.3) und dem zweiten elektrischen VerbraucherModul (5.2, 5.4)
umfasst,
wobei das zweite Koppelmodul (5.3) dazu ausgestaltet ist, ein über das Stromversorgungsnetz (20.1, 20.2) übertragenes Anweisungs-Signal (A.2, A.3) in eine Anweisung umzuwandeln, welche über eine Datenverbindung übermittelbar ist, wobei das zentrale Steuergerät (10) dazu ausgestaltet ist, automatisch eine Anweisung für das zweite Verbraucher-Modul (5.2, 5.4) zu generieren,
wobei das zweite Verbraucher-Modul (5.2, 5.4) dazu ausgestaltet ist, eine empfangene Anweisung automatisch zu verarbeiten und
wobei das Wasserfahrzeug dazu ausgestaltet ist,
- eine Anweisung vom zentralen Steuergerät (10) über die erste Steuergerät-Kopfstation-Datenverbindung (21.1, 21.2) an die erste Kopfstation (3.1) zu übermitteln,
- die Anweisung als ein Anweisungs-Signal von der ersten Kopfstation (3.1) über die erste Kopfstation-Stromnetz-Datenverbindung (21.4), das Stromversorgungsnetz (20.1, 20.2) und die zweite Koppelmodul-Stromnetz-Datenverbindung (21.11) an das zweite Koppelmodul (5.3) zu übertragen und
- die Anweisung vom zweiten Koppelmodul (5.3) über die zweite Koppelmodul-Verbraucher-Datenverbindung (21.8, 21.9) an das zweite elektrische Verbraucher-Modul (5.2, 5.4) zu übermitteln.

8. Wasserfahrzeug nach einem der vorstehenden Ansprüche,
**dadurch gekennzeichnet, dass**
das erste Verbraucher-Modul (4.3, 4.5) und das erste Koppelmodul (4.4) als Bestandteile einer ersten Baugruppe (4.1) ausgebildet sind,
wobei die erste Baugruppe (4.1) lösbar mit dem Stromversorgungsnetz (20.1, 20.2) verbunden ist.

9. Wasserfahrzeug nach einem der vorstehenden Ansprüche,
**dadurch gekennzeichnet, dass**
das erste Verbraucher-Modul
- ein lokales Steuergerät (4.5) und
- einen ersten elektrischen Verbraucher (4.4)
umfasst,
wobei die erste Koppelmodul-Verbraucher-Datenverbindung (21.6, 21.7) das erste Koppelmodul (4.4) mit dem lokalen Steuergerät (4.5) verbindet und
wobei das lokale Steuergerät (4.5) dazu ausgestaltet ist, den ersten Verbraucher (4.4) abhängig von einer Anweisung (A.1) des zentralen Steuergeräts (10) anzusteuern.

10. Wasserfahrzeug nach einem der vorstehenden Ansprüche,
**dadurch gekennzeichnet, dass**
das Datenverbindungs-System
- einen Feldbus-Master (11) und
- einen ersten Feldbus-Slave (15.1)
umfasst,
wobei die erste Steuergerät-Kopfstation-Datenverbindung (21.1, 21.2)
- eine Steuergerät-Feldbus-Datenverbindung (21.1) zwischen dem zentralen Steuergerät (10) und dem Feldbus-Master (11) und
- eine erste Feldbus-Kopfstation-Datenverbindung (21.2) zwischen dem Feldbus-Master (11) und der ersten Kopfstation (3.1)
umfasst,
wobei die erste Koppelmodul-Verbraucher-Datenverbindung (21.6, 21.7)
- eine erste Koppelmodul-Feldbus-Datenverbindung (21.6) zwischen dem ersten Koppelmodul (4.4) und dem ersten Feldbus-Slave (15.1) und
- eine erste Slave-Verbraucher-Datenverbindung (21.7) zwischen dem ersten Feldbus-Slave (15.1) und dem ersten elektrischen Verbraucher-Modul (4.3, 4.5)
umfasst,
wobei
- die Steuergerät-Feldbus-Datenverbindung (21.1),
- die erste Feldbus-Kopfstation-Datenverbindung (21.2),
- die erste Kopfstation-Stromnetz-Datenverbindung (21.4),
- ein Teil (20.1) des Stromversorgungsnetzes (20.1, 20.2),
- die erste Koppelmodul-Stromnetz-Datenverbindung (21.10) und
- die erste Koppelmodul-Feldbus-Datenverbindung (21.6)
zusammen eine Feldbus-Verbindung zwischen dem Feldbus-Master (11) und dem ersten Feldbus-Slave (15.1) bereitstellen,
wobei der Feldbus-Master (11) dazu ausgestaltet ist, eine über eine Datenverbindung übermittelte Anweisung (A.1) in eine Feldbus-Anweisung (A.2) umzuwandeln,
wobei der erste Feldbus-Slave (15.1) dazu ausgestaltet ist, eine übermittelte Feldbus-Anweisung (A.2) in eine über eine Datenverbindung übermittelbare Anweisung (A.1) umzuwandeln, und
wobei das Wasserfahrzeug dazu ausgestaltet ist,
- die Anweisung (A.1) vom zentralen Steuergerät (10) über die Steuergerät-Feldbus-Datenverbindung (21.1) an den Feldbus-Master (11) zu übermitteln,
- die Anweisung (A.1) als eine Feldbus-Anweisung (A.2) über die bereitgestellte Feldbus-Verbindung von dem Feldbus-Master (11) an den ersten Feldbus-Slave (15.1) zu übermitteln und
- die Anweisung (A.1) vom ersten Feldbus-Slave (15.1) über die erste Slave-Verbraucher-Datenverbindung (21.7) an das erste elektrische Verbraucher-Modul (4.3, 4.5) zu übermitteln.

11. Wasserfahrzeug nach Anspruch 10,
**dadurch gekennzeichnet, dass**
das erste Verbraucher-Modul (4.3, 4.5), das erste Koppelmodul (4.4) und der erste Feldbus-Slave (15.1)
als Bestandteile einer ersten Baugruppe (4.1) ausgebildet sind,
wobei die erste Baugruppe (4.1) lösbar mit dem Stromversorgungsnetz (20.1, 20.2) verbunden ist.

12. Wasserfahrzeug nach einem der vorstehenden Ansprüche,
**dadurch gekennzeichnet, dass**
das Wasserfahrzeug mindestens eine Spannungsquelle (1.1, 1.2) umfasst, welche
- mit dem Stromversorgungsnetz (20.1, 20.2) elektrisch verbunden ist und
- dazu ausgestaltet ist, das erste Verbraucher-Modul (4.3, 4.5) sowie das zentrale Steuergerät (10), die erste Kopfstation (3.1) und das erste Koppelmodul (4.4) über das Spannungsversorgungsnetz (20.1, 20.2) elektrisch zu versorgen.

13. Wasserfahrzeug nach einem der vorstehenden Ansprüche,
**dadurch gekennzeichnet, dass**
dem ersten Verbraucher-Modul (4.3, 4.5) ein erster Energiespeicher zugeordnet ist, welche dazu ausgestaltet ist, das erste Koppelmodul (4.4) elektrisch zu versorgen.

14. Verfahren zur Übertragung einer Anweisung von einem zentralen Steuergerät (10) an ein erstes ansteuerbares elektrisches Verbraucher-Modul (4.3, 4.5),
wobei das Verfahren an Bord eines Wasserfahrzeugs durchgeführt wird,
wobei das Wasserfahrzeug
- das zentrale Steuergerät (10),
- das erste Verbraucher-Modul (4.3, 4.5) und
- ein Stromversorgungsnetz (20.1, 20.2) und
- ein Datenverbindungs-System
umfasst,
wobei das erste Verbraucher-Modul (4.3, 4.5) mit Hilfe des Stromversorgungsnetzes (20.1, 20.2) elektrisch versorgt wird und
wobei das Verfahren die Schritte umfasst, dass
- das zentrale Steuergerät (10) automatisch eine Anweisung (A.1) für das erste Verbraucher-Modul (4.3, 4.5) generiert und
- das erste Verbraucher-Modul (4.3, 4.5) die empfangene Anweisung (A.1) automatisch verarbeitet,
wobei
das Datenverbindungs-System
- eine erste Kopfstation (3.1),
- ein erstes Koppelmodul (4.4),
- eine erste Steuergerät-Kopfstation-Datenverbindung (21.1, 21.2) zwischen dem zentralen Steuergerät (10) und der ersten Kopfstation (3.1),
- eine erste Kopfstation-Stromnetz-Datenverbindung (21.4) zwischen der ersten Kopfstation (3.1) und dem Stromversorgungsnetz (20.1, 20.2),
- eine erste Koppelmodul-Stromnetz-Datenverbindung (21.10) zwischen dem ersten Koppelmodul (4.4) und dem Stromversorgungsnetz (20.1, 20.2) und
- eine erste Koppelmodul-Verbraucher-Datenverbindung (21.6, 21.7) zwischen dem ersten Koppelmodul (4.4) und dem ersten elektrischen Verbraucher-Modul (4.3, 4.5)
umfasst,
**dadurch gekennzeichnet, dass**
der Schritt, die Anweisung (A.1) von dem zentralen Steuergerät (10) an das erste Verbraucher-Modul (4.3, 4.5) zu übermitteln,
die Schritte umfasst, dass
- die Anweisung (A.1) vom zentralen Steuergerät (10) über die erste Steuergerät-Kopfstation-Datenverbindung (21.1, 21.2) an die erste Kopfstation (3.1) übermittelt wird,
- die erste Kopfstation (3.1) die erhaltene Anweisung (A.1, A.2) in ein Anweisungs-Signal (A.3) umwandelt, welches über das Stromversorgungsnetz (20.1, 20.2) übertragbar ist,
- das Anweisungs-Signal (A.3) von der ersten Kopfstation (3.1) über die erste Kopfstation-Stromnetz-Datenverbindung (21.4), das Stromversorgungsnetz (20.1, 20.2) und die erste Koppelmodul-Stromnetz-Datenverbindung (21.10) an das erste Koppelmodul (4.4) übertragen wird,
- das erste Koppelmodul (4.4) aus dem übertragenen Anweisungs-Signal (A.3) die Anweisung (A.1) so rekonstruiert, dass diese über eine Datenverbindung übermittelbar ist, und
- die rekonstruierte Anweisung (A.1) vom ersten Koppelmodul (4.4) über die erste Koppelmodul-Verbraucher-Datenverbindung (21.6, 21.7) an das erste elektrische Verbraucher-Modul (4.3, 4.5) übermittelt wird.

15. Verfahren nach Anspruch 14,
**dadurch gekennzeichnet, dass**
das Datenverbindungs-System
- einen Feldbus-Master (11) und
- einen ersten Feldbus-Slave (15.1)
umfasst,
wobei die erste Steuergerät-Kopfstation-Datenverbindung (21.1, 21.2)
- eine Steuergerät-Feldbus-Datenverbindung (21.1) zwischen dem zentralen Steuergerät (10) und dem Feldbus-Master (11) und
- eine erste Feldbus-Kopfstation-Datenverbindung (21.2) zwischen dem Feldbus-Master (11) und der ersten Kopfstation (3.1)
umfasst,
wobei die erste Koppelmodul-Verbraucher-Datenverbindung (21.6, 21.7)
- eine erste Koppelmodul-Feldbus-Datenverbindung (21.6) zwischen dem ersten Koppelmodul (4.4) und dem ersten Feldbus-Slave (15.1) und
- eine erste Slave-Verbraucher-Datenverbindung (21.7) zwischen dem ersten Feldbus-Slave (15.1) und dem ersten elektrischen Verbraucher-Modul (4.3, 4.5)
umfasst,
wobei
- die Steuergerät-Feldbus-Datenverbindung (21.1),
- die erste Feldbus-Kopfstation-Datenverbindung (21.2),
- die erste Kopfstation-Stromnetz-Datenverbindung (21.4),
- ein Teil (20.1) des Stromversorgungsnetzes (20.1, 20.2),
- die erste Koppelmodul-Stromnetz-Datenverbindung (21.10) und
- die erste Koppelmodul-Feldbus-Datenverbindung (21.6)
zusammen eine Feldbus-Verbindung zwischen dem Feldbus-Master (11) und dem ersten Feldbus-Slave (15.1) bereitstellen,
wobei der Schritt, die Anweisung (A.1) vom zentralen Steuergerät (10) an das erste Verbraucher-Modul (4.3, 4.5) zu übertragen, die Schritte umfasst, dass
- die Anweisung (A.1) vom zentralen Steuergerät (10) an den Feldbus-Master (11) übermittelt wird,
- der Feldbus-Master (11) die Anweisung (A.1) in eine Feldbus-Anweisung (A.2) umwandelt,
- die Feldbus-Anweisung (A.2) über einen Teil der Feldbus-Verbindung an die erste Kopfstation (3.1) übermittelt wird,
- die erste Kopfstation (3.1) die erhaltenen Feldbus-Anweisung (A.2) in ein Feldbus-Anweisungs-Signal (A.3) umwandelt, welches über das Stromversorgungsnetz (20.1, 20.2) übertragbar ist,
- das Feldbus-Anweisungs-Signal (A.3) von der ersten Kopfstation (3.1) über einen zum Stromversorgungsnetz (20.1, 20.2) gehörenden Teil der Feldbus-Verbindung an das erste Koppelmodul (4.4) übertragen wird,
- das erste Koppelmodul (4.4) das über das Stromversorgungsnetz (20.1, 20.2) erhaltene Feldbus-Anweisungs-Signal (A.3) in eine über eine Datenverbindung übermittelbare Feldbus-Anweisung (A.2) umwandelt,
- die Feldbus-Anweisung (A.2) über einen Teil der Feldbus-Verbindung an den ersten Feldbus-Slave (15.1) übermittelt wird,
- der erste Feldbus-Slave (15.1) die Feldbus-Anweisung (A.2) in eine Anweisung (A.1) umwandelt, die über eine Datenverbindung übermittelbar ist, und
- die Anweisung (A.1) vom ersten Feldbus-Slave (15.1) über die erste Slave-Verbraucher-Datenverbindung (21.7) an das erste elektrische Verbraucher-Modul (4.3, 4.5) übermittelt wird.

## Claims

1. A watercraft, having
- a first controllable electrical consumer module (4.3, 4.5),
- a central control unit (10),
- a power supply network (20.1, 20.2), and
- a data connection system,
wherein the power supply network (20.1, 20.2) is designed to supply electricity to the first consumer module (4.3, 4.5),
wherein the central control unit (10) is designed to generate an instruction (A.1) for the first consumer module (4.3, 4.5), and
wherein the first consumer module (4.3, 4.5) is designed to process a received instruction (A.1),
wherein
the data connection system comprises:
- a first head station (3.1),
- a first coupling module (4.4),
- a first control unit-head station data connection (21.1, 21.2) between the central control unit (10) and the first head station (3.1),
- a first head station-power line data connection (21.4) between the first head station (3.1) and the power supply network (20.1, 20.2),
- a first coupling module-power line data connection (21.10) between the first coupling module (4.4) and the power supply network (20.1, 20.2), and
- a first coupling module-consumer data connection (21.6, 21.7) between the first coupling module (4.4) and the first electrical consumer module (4.3, 4.5),
**characterized in that** the first head station (3.1) is designed to convert an instruction (A.1, A.2) which is transmitted via a data connection to the first head station (3.1) into an instruction signal (A.3) which is transmittable via the power supply network (20.1, 20.2),
wherein the first coupling module (4.4) is designed to convert an instruction signal (A.2, A.3) transmitted via the power supply network (20.1, 20.2) into an instruction (A.1) which is transmittable via a data connection, and
wherein the watercraft is designed:
- to transmit an instruction (A.1) from the central control unit (10) via the first control unit-head station data connection (21.1, 21.2) to the first head station (3.1),
- to transmit the instruction (A.1) as an instruction signal (A.2, A.3) from the first head station (3.1) via the first head station-power line data connection (21.4), the power supply network (20.1, 20.2) and the first coupling module-power line data connection (21.10) to the first coupling module (4.4), and
- to transmit the instruction (A.1) from the first coupling module (4.4) via the first coupling module-consumer data connection (21.6, 21.7) to the first electrical consumer module (4.3, 4.5).

2. The watercraft as claimed in claim 1,
**characterized in that**
the first electrical consumer module (4.3, 4.5) is designed to generate a message (M.1) for the central control unit (10), and
the central control unit (10) is designed to process a received message (M.1), wherein the first coupling module (4.4) is designed to convert a message (M.1) which is transmitted via a data connection to the first coupling module (4.4) into a message signal (M.2, M.3) which is transmittable via the power supply network (20.1, 20.2),
wherein the first head station (3.1) is designed to convert a message signal (M.2, M.3) transmitted via the power supply network (20.1, 20.2) into a message (M.1) which is transmittable via a data connection, and
wherein the watercraft is designed:
- to transmit a message (M.1) from the first consumer module (4.3, 4.5) via the first coupling module-consumer data connection (21.6, 21.7) to the first coupling module (4.4),
- to transmit the message (M.1) as a message signal (M.2, M.3) from the first coupling module (4.4) via the first coupling module-power line data connection (21.10), the power supply network (20.1, 20.2) and the first head station-power line data connection (21.4) to the first head station (3.1), and
- to transmit the message (M.1) from the first head station (3.1) via the first control unit-head station data connection (21.1, 21.2) to the central control unit (10).

3. The watercraft as claimed in one of the preceding claims,
**characterized in that**
the data connection system comprises:
- a second head station (3.2),
- a second control unit-head station data connection (21.1, 21.3) between the central control unit (10) and the second head station (3.2), and
- a second head station-power line data connection (21.5) between the second head station (3.2) and the power supply network (20.1, 20.2),
wherein the second head station (3.2) is arranged parallel to the first head station (3.1),
wherein the second head station (3.2) is designed to convert an instruction (A.1) which is transmitted via a data connection to the second head station (3.2) into an instruction signal (A.2, A.3) which is transmittable via the power supply network (20.1, 20.2), and
wherein the watercraft is designed:
- to transmit an instruction (A.1) from the central control unit (10) via the second control unit-head station data connection (21.1, 21.3) to the second head station (3.2), and
- to transmit the instruction (A.1) as an instruction signal (A.2, A.3) from the second head station (3.2) via the second head station-power line data connection (21.5), the power supply network (20.1, 20.2) and the first coupling module-power line data connection (21.10) to the first coupling module (4.4).

4. The watercraft as claimed in claim 3,
**characterized in that**
the data connection system comprises at least one data connection control unit (12.1, 12.2),
wherein the or each data connection control unit (12.1, 12.2) is designed:
if both the first head station (3.1) and the second head station (3.2) are operational, to select and activate a head station (3.1),
if one head station (3.1) has failed, to activate the other head station (3.2), and
by incorporating the power supply network (20.1, 20.2), the activated head station (3.1, 3.2) and the first coupling module (4.4),
to set up a first data connection between the central control unit (10) and the first consumer module (4.3, 4.5).

5. The watercraft as claimed in claim 4,
**characterized in that**
the or each data connection control unit (12.1, 12.2) is designed:
if the activated head station (3.1) fails after the first data connection has been set up,
to activate the other head station (3.2), and
by incorporating the power supply network (20.1, 20.2), the activated other head station (3.2) and the first coupling module (4.4),
to set up a second data connection between the central control unit (10) and the first consumer module (4.3, 4.5).

6. The watercraft as claimed in claim 4 or claim 5,
**characterized in that**
the first head station (3.1) comprises a first data connection control unit (12.1), and the second head station (3.2) comprises a second data connection control unit (12.2),
wherein each data connection control unit (12.1, 12.2) is designed:
- to activate its own head station (3.1, 3.2), and
- by incorporating the power supply network (20.1, 20.2), its own activated head station (3.1, 3.2) and the first coupling module (4.4),
to set up a first data connection between the central control unit (10) and the first consumer module (4.3, 4.5).

7. The watercraft as claimed in one of the preceding claims,
**characterized in that**
the watercraft comprises a second controllable electrical consumer module (5.2, 5.4), and
the data connection system comprises:
- a second coupling module (5.3),
- a second coupling module-power line data connection (21.11) between the second coupling module (5.3) and the power supply network (20.1, 20.2), and
- a second coupling module-consumer data connection (21.8, 21.9) between the second coupling module (5.3) and the second electrical consumer module (5.2, 5.4),
wherein the second coupling module (5.3) is designed to convert an instruction signal (A.2, A.3) transmitted via the power supply network (20.1, 20.2) into an instruction which is transmittable via a data connection,
wherein the central control unit (10) is designed to generate an instruction automatically for the second consumer module (5.2, 5.4),
wherein the second consumer module (5.2, 5.4) is designed to process a received instruction automatically, and
wherein the watercraft is designed:
- to transmit an instruction from the central control unit (10) via the first control unit-head station data connection (21.1, 21.2) to the first head station (3.1),
- to transmit the instruction as an instruction signal from the first head station (3.1) via the first head station-power line data connection (21.4), the power supply network (20.1, 20.2) and the second coupling module-power line data connection (21.11) to the second coupling module (5.3), and
- to transmit the instruction from the second coupling module (5.3) via the second coupling module-consumer data connection (21.8, 21.9) to the second electrical consumer module (5.2, 5.4).

8. The watercraft as claimed in one of the preceding claims,
**characterized in that**
the first consumer module (4.3, 4.5) and the first coupling module (4.4) are designed as components of a first assembly (4.1),
wherein the first assembly (4.1) is detachably connected to the power supply network (20.1, 20.2).

9. The watercraft as claimed in one of the preceding claims,
**characterized in that**
the first consumer module comprises:
- a local control unit (4.5), and
- a first electrical consumer (4.4),
wherein the first coupling module-consumer data connection (21.6, 21.7) connects the first coupling module (4.4) to the local control unit (4.5), and
wherein the local control unit (4.5) is designed to control the first consumer (4.4) depending on an instruction (A.1) from the central control unit (10).

10. The watercraft as claimed in one of the preceding claims,
**characterized in that**
the data connection system comprises:
- a fieldbus master (11), and
- a first fieldbus slave (15.1),
wherein the first control unit-head station data connection (21.1, 21.2) comprises:
- a control unit-fieldbus data connection (21.1) between the central control unit (10) and the fieldbus master (11), and
- a first fieldbus-head station data connection (21.2) between the fieldbus master (11) and the first head station (3.1),
wherein the first coupling module-consumer data connection (21.6, 21.7) comprises:
- a first coupling module-fieldbus data connection (21.6) between the first coupling module (4.4) and the first fieldbus slave (15.1), and
- a first slave-consumer data connection (21.7) between the first fieldbus slave (15.1) and the first electrical consumer module (4.3, 4.5),
wherein:
- the control unit-fieldbus data connection (21.1),
- the first fieldbus-head station data connection (21.2),
- the first head station-power line data connection (21.4),
- a part (20.1) of the power supply network (20.1, 20.2),
- the first coupling module-power line data connection (21.10), and
- the first coupling module-fieldbus data connection (21.6) together provide a fieldbus connection between the fieldbus master (11) and the first fieldbus slave (15.1),
wherein the fieldbus master (11) is designed to convert an instruction (A.1) transmitted via a data connection into a fieldbus instruction (A.2),
wherein the first fieldbus slave (15.1) is designed to convert a transmitted fieldbus instruction (A.2) into an instruction (A.1) transmittable via a data connection, and wherein the watercraft is designed:
- to transmit the instruction (A.1) from the central control unit (10) via the control unit-fieldbus data connection (21.1) to the fieldbus master (11),
- to transmit the instruction (A.1) as a fieldbus instruction (A.2) via the provided fieldbus connection from the fieldbus master (11) to the first fieldbus slave (15.1), and
- to transmit the instruction (A.1) from the first fieldbus slave (15.1) via the first slave-consumer data connection (21.7) to the first electrical consumer module (4.3, 4.5).

11. The watercraft as claimed in claim 10,
**characterized in that**
the first consumer module (4.3, 4.5), the first coupling module (4.4) and the first fieldbus slave (15.1) are designed as components of a first assembly (4.1),
wherein the first assembly (4.1) is detachably connected to the power supply network (20.1, 20.2).

12. The watercraft as claimed in one of the preceding claims,
**characterized in that**
the watercraft comprises at least one voltage source (1.1, 1.2) which:
- is electrically connected to the power supply network (20.1, 20.2), and
- is designed to supply electricity to the first consumer module (4.3, 4.5) and to the central control unit (10), the first head station (3.1) and the first coupling module (4.4) via the voltage supply network (20.1, 20.2).

13. The watercraft as claimed in one of the preceding claims,
**characterized in that**
a first energy storage device which is designed to supply electricity to the first coupling module (4.4) is assigned to the first consumer module (4.3, 4.5).

14. A method for transmitting an instruction from a central control unit (10) to a first
controllable electrical consumer module (4.3, 4.5),
wherein the method is carried out on board a watercraft,
wherein the watercraft comprises:
- the central control unit (10),
- the first consumer module (4.3, 4.5),
- a power supply network (20.1, 20.2), and
- a data connection system,
wherein electricity is supplied to the first consumer module (4.3, 4.5) by means of the power supply network (20.1, 20.2), and
wherein the method comprises the steps in which:
- the central control unit (10) automatically generates an instruction (A.1) for the first consumer module (4.3, 4.5), and
- the first consumer module (4.3, 4.5) automatically processes the received instruction (A.1),
wherein
the data connection system comprises:
- a first head station (3.1),
- a first coupling module (4.4),
- a first control unit-head station data connection (21.1, 21.2) between the central control unit (10) and the first head station (3.1),
- a first head station-power line data connection (21.4) between the first head station (3.1) and the power supply network (20.1, 20.2),
- a first coupling module-power line data connection (21.10) between the first coupling module (4.4) and the power supply network (20.1, 20.2), and
- a first coupling module-consumer data connection (21.6, 21.7) between the first coupling module (4.4) and the first electrical consumer module (4.3, 4.5), **characterized in that** the step of transmitting the instruction (A.1) from the central control unit (10) to the first consumer module (4.3, 4.5) comprises the steps in which:
- the instruction (A.1) is transmitted from the central control unit (10) via the first control unit-head station data connection (21.1, 21.2) to the first head station (3.1),
- the first head station (3.1) converts the received instruction (A.1, A.2) into an instruction signal (A.3) which is transmittable via the power supply network (20.1, 20.2),
- the instruction signal (A.3) is transmitted from the first head station (3.1) via the first head station-power line data connection (21.4), the power supply network (20.1, 20.2) and the first coupling module-power line data connection (21.10) to the first coupling module (4.4),
- the first coupling module (4.4) reconstructs the instruction (A.1) from the transmitted instruction signal (A.3) in such a way that it is transmittable via a data connection, and
- the reconstructed instruction (A.1) is transmitted from the first coupling module (4.4) via the first coupling module-consumer data connection (21.6, 21.7) to the first electrical consumer module (4.3, 4.5).

15. The method as claimed in claim 144,
**characterized in that**
the data connection system comprises:
- a fieldbus master (11), and
- a first fieldbus slave (15.1),
wherein the first control unit-head station data connection (21.1, 21.2) comprises:
- a control unit-fieldbus data connection (21.1) between the central control unit (10) and the fieldbus master (11), and
- a first fieldbus-head station data connection (21.2) between the fieldbus master (11) and the first head station (3.1),
wherein the first coupling module-consumer data connection (21.6, 21.7) comprises:
- a first coupling module-fieldbus data connection (21.6) between the first coupling module (4.4) and the first fieldbus slave (15.1), and
- a first slave-consumer data connection (21.7) between the first fieldbus slave (15.1) and the first electrical consumer module (4.3, 4.5),
wherein:
- the control unit-fieldbus data connection (21.1),
- the first fieldbus-head station data connection (21.2),
- the first head station-power line data connection (21.4),
- a part (20.1) of the power supply network (20.1, 20.2),
- the first coupling module-power line data connection (21.10), and
- the first coupling module-fieldbus data connection (21.6)
together provide a fieldbus connection between the fieldbus master (11) and the first fieldbus slave (15.1),
wherein the step of transmitting the instruction (A.1) from the central control unit (10) to the first consumer module (4.3, 4.5) comprises the steps in which:
- the instruction (A.1) is transmitted from the central control unit (10) to the fieldbus master (11),
- the fieldbus master (11) converts the instruction (A.1) into a fieldbus instruction (A.2),
- the fieldbus instruction (A.2) is transmitted via a part of the fieldbus connection to the first head station (3.1),
- the first head station (3.1) converts the received fieldbus instruction (A.2) into a fieldbus instruction signal (A.3) which is transmittable via the power supply network (20.1, 20.2),
- the fieldbus instruction signal (A.3) is transmitted from the first head station (3.1) to the first coupling module (4.4) via a part of the fieldbus connection belonging to the power supply network (20.1, 20.2),
- the first coupling module (4.4) converts the fieldbus instruction signal (A.3) received via the power supply network (20.1, 20.2) into a fieldbus instruction (A.2) transmittable via a data connection,
- the fieldbus instruction (A.2) is transmitted via a part of the fieldbus connection to the first fieldbus slave (15.1),
- the first fieldbus slave (15.1) converts the fieldbus instruction (A.2) into an instruction (A.1) which is transmittable via a data connection, and
- the instruction (A.1) is transmitted from the first fieldbus slave (15.1) via the first slave-consumer data connection (21.7) to the first electrical consumer module (4.3, 4.5).

## Revendications

1. Véhicule aquatique, comprenant
- un premier module consommateur électrique pouvant être piloté (4.3, 4.5),
- un appareil de commande central (10),
- un réseau d'alimentation électrique (20.1, 20.2), et
- un système de liaison de données,
le réseau d'alimentation électrique (20.1, 20.2) étant configuré pour l'alimentation électrique du premier module consommateur (4.3, 4.5),
l'appareil de commande central (10) étant configuré pour générer une instruction (A.1) pour le premier module consommateur (4.3, 4.5), et
le premier module consommateur (4.3, 4.5) étant configuré pour traiter une instruction reçue (A.1),
le système de liaison de données comprenant
- une première station de tête (3.1),
- un premier module de couplage (4.4),
- une première liaison de données appareil de commande/station de tête (21.1, 21.2) entre l'appareil de commande central (10) et la première station de tête (3.1),
- une première liaison de données station de tête/réseau électrique (21.4) entre la première station de tête (3.1) et le réseau d'alimentation électrique (20.1, 20.2),
- une première liaison de données module de couplage/réseau électrique (21.10) entre le premier module de couplage (4.4) et le réseau d'alimentation électrique (20.1, 20.2), et
- une première liaison de données module de couplage/consommateur (21.6, 21.7) entre le premier module de couplage (4.4) et le premier module consommateur électrique (4.3, 4.5),
**caractérisé en ce que** la première station de tête (3.1) est configurée pour convertir une instruction (A.1, A.2) qui est transmise par une liaison de données à la première station de tête (3.1) en un signal d'instruction (A.3) qui peut être transféré par le réseau d'alimentation électrique (20.1, 20.2),
le premier module de couplage (4.4) étant configuré pour convertir un signal d'instruction (A.2, A.3) transféré par le réseau d'alimentation électrique (20.1, 20.2) en une instruction (A.1) qui peut être transmise par une liaison de données, et
le véhicule aquatique étant configuré pour
- transmettre une instruction (A.1) de l'appareil de commande central (10) par la première liaison de données appareil de commande/station de tête (21.1, 21.2) à la première station de tête (3.1),
- transférer l'instruction (A.1) sous forme de signal d'instruction (A.2, A.3) de la première station de tête (3.1) par la première liaison de données station de tête/réseau électrique (21.4), le réseau d'alimentation électrique (20.1, 20.2) et la première liaison de données module de couplage/réseau électrique (21.10) au premier module de couplage (4.4), et
- transmettre l'instruction (A.1) du premier module de couplage (4.4) par la première liaison de données module de couplage/consommateur (21.6, 21.7) au premier module consommateur électrique (4.3, 4.5).

2. Véhicule aquatique selon la revendication 1, **caractérisé en ce que** le premier module consommateur électrique (4.3, 4.5) est configuré pour générer une notification (M.1) pour l'appareil de commande central (10), et
l'appareil de commande central (10) est configuré pour traiter une notification reçue (M.1),
le premier module de couplage (4.4) étant configuré pour convertir une notification (M.1) qui est transmise par une liaison de données au premier module de couplage (4.4) en un signal de notification (M.2, M.3) qui peut être transféré par le réseau d'alimentation électrique (20.1, 20.2),
la première station de tête (3.1) étant configurée pour convertir un signal de notification (M.2, M.3) transféré par le réseau d'alimentation électrique (20.1, 20.2) en une notification (M.1) qui peut être transmise par une liaison de données, et
le véhicule aquatique étant configuré pour
- transmettre une notification (M.1) du premier module consommateur (4.3, 4.5) par la première liaison de données module de couplage/consommateur (21.6, 21.7) au premier module de couplage (4.4),
- transférer la notification (M.1) sous forme de signal de notification (M.2, M.3) du premier module de couplage (4.4) par la première liaison de données module de couplage/réseau électrique (21.10), le réseau d'alimentation électrique (20.1, 20.2) et la première liaison de données station de tête/réseau électrique (21.4) à la première station de tête (3.1), et
- transmettre la notification (M.1) de la première station de tête (3.1) par la première liaison de données appareil de commande/station de tête (21.1, 21.2) à l'appareil de commande central (10).

3. Véhicule aquatique selon l'une quelconque des revendications précédentes, **caractérisé en ce que** le système de liaison de données comprend
- une deuxième station de tête (3.2),
- une deuxième liaison de données appareil de commande/station de tête (21.1, 21.3) entre l'appareil de commande central (10) et la deuxième station de tête (3.2), et
- une deuxième liaison de données station de tête/réseau électrique (21.5) entre la deuxième station de tête (3.2) et le réseau d'alimentation électrique (20.1, 20.2),
la deuxième station de tête (3.2) étant disposée en parallèle à la première station de tête (3.1),
la deuxième station de tête (3.2) étant configurée pour convertir une instruction (A.1) qui est transmise par une liaison de données à la deuxième station de tête (3.2) en un signal d'instruction (A.2, A.3) qui peut être transféré par le réseau d'alimentation électrique (20.1, 20.2), et
le véhicule aquatique étant configuré pour
- transmettre une instruction (A.1) de l'appareil de commande central (10) par la deuxième liaison de données appareil de commande/station de tête (21.1, 21.3) à la deuxième station de tête (3.2), et
- transférer l'instruction (A.1) sous forme de signal d'instruction (A.2, A.3) de la deuxième station de tête (3.2) par la deuxième liaison de données station de tête/réseau électrique (21.5), le réseau d'alimentation électrique (20.1, 20.2) et la première liaison de données module de couplage/réseau électrique (21.10) au premier module de couplage (4.4).

4. Véhicule aquatique selon la revendication 3, **caractérisé en ce que** le système de liaison de données comprend au moins un appareil de commande de liaison de données (12.1, 12.2),
ledit ou chaque appareil de commande de liaison de données (12.1, 12.2) étant configuré pour
sélectionner et activer une station de tête (3.1) quand à la fois la première station de tête (3.1) et la deuxième station de tête (3.2) sont opérationnelles,
activer l'autre station de tête (3.2) quand une station de tête (3.1) est défaillante, et
avec intégration du réseau d'alimentation électrique (20.1, 20.2), de la station de tête (3.1, 3.2) activée et du premier module de couplage (4.4), établir une première liaison de données entre l'appareil de commande central (10) et le premier module consommateur (4.3, 4.5).

5. Véhicule aquatique selon la revendication 4, **caractérisé en ce que** ledit ou chaque appareil de commande de liaison de données (12.1, 12.2) est configuré, si après l'établissement de la première liaison de données la station de tête (3.1) activée est défaillante, pour
activer l'autre station de tête (3.2), et
avec intégration du réseau d'alimentation électrique (20.1, 20.2), de l'autre station de tête (3.2) activée et du premier module de couplage (4.4), établir une deuxième liaison de données entre l'appareil de commande central (10) et le premier module consommateur (4.3, 4.5).

6. Véhicule aquatique selon la revendication 4 ou 5, **caractérisé en ce que**
la première station de tête (3.1) comprend un premier appareil de commande de liaison de données (12.1), et
la deuxième station de tête (3.2) comprend un deuxième appareil de commande de liaison de données (12.2),
chaque appareil de commande de liaison de données (12.1, 12.2) étant configuré pour
- activer sa propre station de tête (3.1, 3.2), et
- avec intégration du réseau d'alimentation électrique (20.1, 20.2), de sa propre station de tête (3.1, 3.2) activée et du premier module de couplage (4.4), établir une liaison de données entre l'appareil de commande central (10) et le premier module consommateur (4.3, 4.5).

7. Véhicule aquatique selon l'une quelconque des revendications précédentes, **caractérisé en ce que** le véhicule aquatique comprend un deuxième module consommateur électrique pouvant être piloté (5.2, 5.4), et
le système de liaison de données comprend
- un deuxième module de couplage (5.3),
- une deuxième liaison de données module de couplage/réseau électrique (21.11) entre le deuxième module de couplage (5.3) et le réseau d'alimentation électrique (20.1, 20.2), et
- une deuxième liaison de données module de couplage/consommateur (21.8, 21.9) entre le deuxième module de couplage (5.3) et le deuxième module consommateur électrique (5.2, 5.4),
le deuxième module de couplage (5.3) étant configuré pour convertir un signal d'instruction (A.2, A.3) transféré par le réseau d'alimentation électrique (20.1, 20.2) en une instruction qui peut être transmise par une liaison de données,
l'appareil de commande central (10) étant configuré pour générer automatiquement une instruction pour le deuxième module consommateur (5.2, 5.4),
le deuxième module consommateur (5.2, 5.4) étant configuré pour traiter automatiquement une instruction reçue, et
le véhicule aquatique étant configuré pour
- transmettre une instruction de l'appareil de commande central (10) par la première liaison de données appareil de commande/station de tête (21.1, 21.2) à la première station de tête (3.1),
- transférer l'instruction sous forme de signal d'instruction de la première station de tête (3.1) par la première liaison de données station de tête/réseau électrique (21.4), le réseau d'alimentation électrique (20.1, 20.2) et la deuxième liaison de données module de couplage/réseau électrique (21.11) au deuxième module de couplage (5.3), et
- transmettre l'instruction du deuxième module de couplage (5.3) par la deuxième liaison de données module de couplage/consommateur (21.8, 21.9) au deuxième module consommateur électrique (5.2, 5.4).

8. Véhicule aquatique selon l'une quelconque des revendications précédentes, **caractérisé en ce que** le premier module consommateur (4.3, 4.5) et le premier module de couplage (4.4) sont réalisés sous forme de composants d'un premier sous-ensemble (4.1),
le premier sous-ensemble (4.1) étant relié de manière amovible au réseau d'alimentation électrique (20.1, 20.2).

9. Véhicule aquatique selon l'une quelconque des revendications précédentes, **caractérisé en ce que** le premier module consommateur comprend
- un appareil de commande local (4.5), et
- un premier consommateur électrique (4.4),
la première liaison de données module de couplage/consommateur (21.6, 21.7) reliant le premier module de couplage (4.4) à l'appareil de commande local (4.5), et
l'appareil de commande local (4.5) étant configuré pour piloter le premier consommateur (4.4) en fonction d'une instruction (A.1) de l'appareil de commande central (10).

10. Véhicule aquatique selon l'une quelconque des revendications précédentes, **caractérisé en ce que** le système de liaison de données comprend
- un maître de bus de terrain (11), et
- un premier esclave de bus de terrain (15.1),
la première liaison de données appareil de commande/station de tête (21.1, 21.2) comprenant
- une liaison de données appareil de commande/bus de terrain (21.1) entre l'appareil de commande central (10) et le maître de bus de terrain (11), et
- une première liaison de données bus de terrain/station de tête (21.2) entre le maître de bus de terrain (11) et la première station de tête (3.1),
la première liaison de données module de couplage/consommateur (21.6, 21.7) comprenant
- une première liaison de données module de couplage/bus de terrain (21.6) entre le premier module de couplage (4.4) et le premier esclave de bus de terrain (15.1), et
- une première liaison de données esclave/consommateur (21.7) entre le premier esclave de bus de terrain (15.1) et le premier module consommateur électrique (4.3, 4.5),
dans lequel
- la liaison de données appareil de commande/bus de terrain (21.1),
- la première liaison de données bus de terrain/station de tête (21.2),
- la première liaison de données station de tête/réseau électrique (21.4),
- une partie (20.1) du réseau d'alimentation électrique (20.1, 20.2),
- la première liaison de données module de couplage/réseau électrique (21.10), et
- la première liaison de données module de couplage/bus de terrain (21.6)
fournissent ensemble une liaison de bus de terrain entre le maître de bus de terrain (11) et le premier esclave de bus de terrain (15.1),
le maître de bus de terrain (11) étant configuré pour convertir une instruction (A.1) transmise par une liaison de données en une instruction de bus de terrain (A.2),
le premier esclave de bus de terrain (15.1) étant configuré pour convertir une instruction de bus de terrain transmise (A.2) en une instruction (A.1) pouvant être transmise par une liaison de données, et
le véhicule aquatique étant configuré pour
- transmettre l'instruction (A.1) de l'appareil de commande central (10) par la liaison de données appareil de commande/bus de terrain (21.1) au maître de bus de terrain (11),
- transmettre l'instruction (A.1) sous forme d'instruction de bus de terrain (A.2) par la liaison de bus de terrain fournie du maître de bus de terrain (11) au premier esclave de bus de terrain (15.1), et
- transmettre l'instruction (A.1) du premier esclave de bus de terrain (15.1) par la première liaison de données esclave/consommateur (21.7) au premier module consommateur électrique (4.3, 4.5).

11. Véhicule aquatique selon la revendication 10, **caractérisé en ce que** le premier module consommateur (4.3, 4.5), le premier module de couplage (4.4) et le premier esclave de bus de terrain (15.1) sont réalisés sous forme de composants d'un premier sous-ensemble (4.1),
le premier sous-ensemble (4.1) étant relié de manière amovible au réseau d'alimentation électrique (20.1, 20.2).

12. Véhicule aquatique selon l'une quelconque des revendications précédentes, **caractérisé en ce que** le véhicule aquatique comprend au moins une source de tension (1.1, 1.2) qui est
- reliée électriquement au réseau d'alimentation électrique (20.1, 20.2), et
- configurée pour l'alimentation électrique du premier module consommateur (4.3, 4.5) ainsi que de l'appareil de commande central (10), de la première station de tête (3.1) et du premier module de couplage (4.4) par le réseau d'alimentation électrique (20.1, 20.2) .

13. Véhicule aquatique selon l'une quelconque des revendications précédentes, **caractérisé en ce que** le premier module consommateur (4.3, 4.5) est associé à un premier accumulateur d'énergie qui est configuré pour l'alimentation électrique du premier module de couplage (4.4) .

14. Procédé de transfert d'une instruction d'un appareil de commande central (10) à un premier module consommateur électrique pouvant être piloté (4.3, 4.5),
le procédé étant effectué à bord d'un véhicule aquatique,
le véhicule aquatique comprenant
- l'appareil de commande central (10),
- le premier module consommateur (4.3, 4.5), et
- un réseau d'alimentation électrique (20.1, 20.2), et
- un système de liaison de données,
le premier module consommateur (4.3, 4.5) étant alimenté en électricité à l'aide du réseau d'alimentation électrique (20.1, 20.2), et
le procédé comprenant les étapes suivantes
- l'appareil de commande central (10) génère automatiquement une instruction (A.1) pour le premier module consommateur (4.3, 4.5), et
- le premier module consommateur (4.3, 4.5) traite automatiquement l'instruction reçue (A.1),
le système de liaison de données comprenant
- une première station de tête (3.1),
- un premier module de couplage (4.4),
- une première liaison de données appareil de commande/station de tête (21.1, 21.2) entre l'appareil de commande central (10) et la première station de tête (3.1),
- une première liaison de données station de tête/réseau électrique (21.4) entre la première station de tête (3.1) et le réseau d'alimentation électrique (20.1, 20.2),
- une première liaison de données module de couplage/réseau électrique (21.10) entre le premier module de couplage (4.4) et le réseau d'alimentation électrique (20.1, 20.2), et
- une première liaison de données module de couplage/consommateur (21.6, 21.7) entre le premier module de couplage (4.4) et le premier module consommateur électrique (4.3, 4.5),
**caractérisé en ce que** l'étape consistant à transmettre l'instruction (A.1) de l'appareil de commande central (10) au premier module consommateur (4.3, 4.5) comprend les étapes suivantes
- l'instruction (A.1) est transmise de l'appareil de commande central (10) par la première liaison de données appareil de commande/station de tête (21.1, 21.2) à la première station de tête (3.1),
- la première station de tête (3.1) convertit l'instruction reçue (A.1, A.2) en un signal d'instruction (A.3) qui peut être transféré par le réseau d'alimentation électrique (20.1, 20.2),
- le signal d'instruction (A.3) est transféré de la première station de tête (3.1) par la première liaison de données station de tête/réseau électrique (21.4), le réseau d'alimentation électrique (20.1, 20.2) et la première liaison de données module de couplage/réseau électrique (21.10) au premier module de couplage (4.4),
- le premier module de couplage (4.4) restitue à partir du signal d'instruction (A.3) transféré l'instruction (A.1) de telle sorte que celle-ci peut être transmise par une liaison de données, et
- l'instruction restituée (A.1) est transmise du premier module de couplage (4.4) par la première liaison de données module de couplage/consommateur (21.6, 21.7) au premier module consommateur électrique (4.3, 4.5).

15. Procédé selon la revendication 14, **caractérisé en ce que** le système de liaison de données comprend
- un maître de bus de terrain (11), et
- un premier esclave de bus de terrain (15.1),
la première liaison de données appareil de commande/station de tête (21.1, 21.2) comprenant
- une liaison de données appareil de commande/bus de terrain (21.1) entre l'appareil de commande central (10) et le maître de bus de terrain (11), et
- une première liaison de données bus de terrain/station de tête (21.2) entre le maître de bus de terrain (11) et la première station de tête (3.1),
la première liaison de données module de couplage/consommateur (21.6, 21.7) comprenant
- une première liaison de données module de couplage/bus de terrain (21.6) entre le premier module de couplage (4.4) et le premier esclave de bus de terrain (15.1), et
- une première liaison de données esclave/consommateur (21.7) entre le premier esclave de bus de terrain (15.1) et le premier module consommateur électrique (4.3, 4.5),
dans lequel
- la liaison de données appareil de commande/bus de terrain (21.1),
- la première liaison de données bus de terrain/station de tête (21.2),
- la première liaison de données station de tête/réseau électrique (21.4),
- une partie (20.1) du réseau d'alimentation électrique (20.1, 20.2),
- la première liaison de données module de couplage/réseau électrique (21.10), et
- la première liaison de données module de couplage/bus de terrain (21.6)
fournissent ensemble une liaison de bus de terrain entre le maître de bus de terrain (11) et le premier esclave de bus de terrain (15.1),
l'étape consistant à transférer l'instruction (A.1) de l'appareil de commande central (10) au premier module consommateur (4.3, 4.5) comprenant les étapes suivantes
- l'instruction (A.1) est transmise de l'appareil de commande central (10) au maître de bus de terrain (11),
- le maître de bus de terrain (11) convertit l'instruction (A.1) en une instruction de bus de terrain (A.2),
- l'instruction de bus de terrain (A.2) est transmise par une partie de la liaison de bus de terrain à la première station de tête (3.1),
- la première station de tête (3.1) convertit l'instruction de bus de terrain reçue (A.2) en un signal d'instruction de bus de terrain (A.3) qui peut être transféré par le réseau d'alimentation électrique (20.1, 20.2),
- le signal d'instruction de bus de terrain (A.3) est transféré de la première station de tête (3.1) par une partie de la liaison de bus de terrain appartenant au réseau d'alimentation électrique (20.1, 20.2) au premier module de couplage (4.4),
- le premier module de couplage (4.4) convertit le signal d'instruction de bus de terrain (A.3) reçu par le réseau d'alimentation électrique (20.1, 20.2) en une instruction de bus de terrain (A.2) pouvant être transmise par une liaison de données,
- l'instruction de bus de terrain (A.2) est transmise par une partie de la liaison de bus de terrain au premier esclave de bus de terrain (15.1),
- le premier esclave de bus de terrain (15.1) convertit l'instruction de bus de terrain (A.2) en une instruction (A.1) qui peut être transmise par une liaison de données, et
- l'instruction (A.1) est transmise du premier esclave de bus de terrain (15.1) par la première liaison de données esclave/consommateur (21.7) au premier module consommateur électrique (4.3, 4.5).
